(19) Europäisches Patentamt
European Patent Office
Office européen des brevets

(11) EP 3 885 418 A1

(12) **EUROPÄISCHE PATENTANMELDUNG**

(43) Veröffentlichungstag:
**29.09.2021 Patentblatt 2021/39**

(21) Anmeldenummer: **21160901.1**

(22) Anmeldetag: **05.03.2021**

(51) Int Cl.:
***C09J 5/06*** (2006.01) ***C09J 7/10*** (2018.01)
***C08K 5/00*** (2006.01) ***C08K 5/14*** (2006.01)
***B32B 7/12*** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **26.03.2020 DE 102020203952**

(71) Anmelder: **tesa SE**
**22848 Norderstedt (DE)**

(72) Erfinder:
- **HANISCH, Dr. Mathias**
**22399 Hamburg (DE)**
- **KUPSKY, Marco**
**25451 Quickborn (DE)**
- **UNTERSTE-WILMS, Fabian**
**22175 Hamburg (DE)**

(74) Vertreter: **tesa SE**
**Hugo-Kirchberg-Straße 1**
**22848 Norderstedt (DE)**

(54) **LATENT REAKTIVER KLEBEFILM**

(57) Die Erfindung betrifft ein Verfahren zum Fügen zweier Substrate unter Verwendung eines thermisch härtbaren Klebefilm, umfassend mindestens eine Schicht aus einem Klebstoff, der seinerseits mindestens ein mit Epoxid-Gruppen funktionalisiertes (Co)Polymer (A) mit einer gewichtsmittleren Molmasse im Bereich von 5 000 g/mol bis 5 000 000 g/mol und/oder mindestens eine Epoxid-haltige Verbindung (B), die vom (Co)Polymer (A) verschieden ist; mindestens einen Radikalbildner (C); mindestens einen Photosäurebildner (D); gegebenenfalls mindestens ein Matrixpolymer als Filmbildner (E); und gegebenenfalls mindestens ein Additiv (F) umfasst oder daraus besteht, wobei die Aushärtung des Klebefilms bei Temperaturen von weniger als 120 °C stattfindet. Die Erfindung betrifft weiterhin einen Verbund, umfassend zwei Substrate, die durch ein entsprechendes Verfahren miteinander verklebt werden.

EP 3 885 418 A1

## Beschreibung

Die Erfindung betrifft ein Verfahren zum Fügen zweier Substrate unter Verwendung eines thermisch härtbaren Klebefilm, umfassend mindestens eine Schicht aus einem Klebstoff, der mindestens eine Epoxid-Verbindung, mindestens einen Radikalbildner und mindestens einen Photosäurebildner umfasst, bei milden Verfahrensbedingungen.

Klebefilme sind ein lange bekanntes Mittel zur Verklebung zweier Substrate miteinander, um die Nachteile von Flüssigklebern zu umgehen. Klebefilme bieten unter anderem den Vorteil, gut gelagert und transportiert werden zu können, gut konfektionierbar zu sein und im Anwendungsfall leicht applizierbar zu sein. Dabei können je nach für den Klebefilm verwendetem Klebstoff gute Repositionierungseigenschaften bei dennoch schließlich sehr hohen Klebkräften realisiert werden. Klebebänder werden heute in vielfältiger Form z. B. als Hilfsmittel in Prozessen und zum Verbinden verschiedener Objekte verwendet. Viele Selbstklebebänder, die Haftklebstoffe enthalten, weisen dabei permanente Klebrigkeit auf. Sie können ohne weitere Härtung üblicherweise unmittelbar nach Verklebung ihre Verbindungsaufgabe ausüben. Mit solchen Selbstklebebändern sind mitunter sehr hohe Verklebungsfestigkeiten realisierbar. Trotzdem besteht in bestimmten Anwendungen der Bedarf nach Klebelösungen, die noch höhere Verklebungsfestigkeiten als klassische Selbstklebebänder erlauben.

Viele solcher Klebesysteme, die zu hochfesten Verklebungen führen, werden in einem Heißverpressschritt appliziert. Die eingesetzten Klebstoffe - die bei Raumtemperatur häufig nicht selbstklebrig sind - schmelzen dann auf, benetzen den Verklebungsuntergrund und bauen während des Abkühlens durch Erstarrung Festigkeit auf. Solche Klebesysteme können zudem noch chemische Reaktivität aufweisen. Durch derartige Reaktionen lässt sich die Kohäsion des Klebstoffs erhöhen und somit die Verklebungsfestigkeit weiter optimieren. Darüber hinaus können solche Reaktionen einen positiven Einfluss auf die chemische Beständigkeit und die Witterungsbeständigkeit aufweisen.

Manche Reaktivklebstoffe umfassen eine mit einem Härter reaktive Polymerzusammensetzung und einen entsprechenden Härter. Das Polymer weist dabei funktionelle Gruppen auf, die mit korrespondierenden Gruppen des Härters unter entsprechender Aktivierung zur Reaktion gebracht werden können. Unter dem Begriff "härtbare Klebstoffe" werden daher im Stand der Technik solche Zubereitungen verstanden, die funktionelle Gruppen enthalten, die durch Einwirkung einer entsprechenden Härterkomponente in Kombination mit erhöhter Temperatur als zusätzlichem Stimulus an einer Reaktion teilnehmen können, die zu einem Molmassenaufbau und/oder einer Quervernetzung zumindest eines Zubereitungsbestandteils führt und/oder verschiedene Zubereitungsbestandteile kovalent aneinander bindet. Eine Möglichkeit dafür stellt die kationische Polymerisation dar.

Es ist bekannt, dass eine kationische Polymerisation thermisch initiiert werden kann durch Wechselwirkung eines Radikalbildners mit einem kationischen Photoinitiator. Beispielsweise wird in Adv. Polym. Sci., 1997, 127, 59 ein Überblick über verschiedene Initiatoren für die Aktivierung eines kationischen Polymerisations-/Härtungsprozesses für Epoxide und Vinylether gegeben. Thermisch und/oder photochemisch aktivierbare Initiatoren werden diskutiert. Es wird auch auf die durch freie Radikale unterstützte kationische Polymerisation eingegangen, jedoch mit Fokus auf die photochemische Aktivierung. Bestrahlungsdauern werden mit 10 min bis 120 min angegeben. Schnellhärtende Klebstoffe bzw. latentreaktive Klebebänder sind nicht genannt. Die angegebenen Reaktionszeiten lassen auch nicht darauf schließen, dass Systeme für eine Schnellhärtung über dieses Konzept zugänglich sind.

Latentreaktive Klebebänder, welche durch kationische Polymerisation gehärtet werden sind beispielsweise in der WO 2016/047387 A1 beschrieben, jedoch erfolgt die Initiierung über einen Photosäurebildner.

Der Nachteil solcher Klebebänder, welche einen Photosäurebildner (PAG / Photo Acid Generator) enthalten liegt darin, dass unter Lichtausschluss produziert und verarbeitet werden muss und die Substrate und/oder die zu härtende Klebemasse für den Aktivierungsbereich durchgängig sein müssen. Die PAGs sind meistens aus einem UV-Bereich gewählt, der auch im Umgebungslicht vorkommen kann bzw. reagieren mindestens teilweise unter Umgebungslichtbedingungen, da eine Aktivierung im UVC-Bereich bzw. sogar im harten UVC-Bereich in der Anwendung möglichst vermieden wird.

Die bisher unveröffentlichte DE 10 2018 2016 868 desselben Anmelders wie die vorliegende Schrift bietet einen thermisch härtbaren Klebefilm umfassend eine Klebstoffschicht an, wobei der Klebstoff mindestens eine epoxidgruppenhaltige Verbindung sowie die Kombination eines Radikalbildners und eines Photosäurebildners umfasst. Solche latentreaktiven Klebebänder liefern gute Produktergebnisse, wenn kurze Aktivierungszeiten bei Temperaturen oberhalb von 180 °C angewandt wurden. Verklebungsverfahren bei moderaten Temperaturen offenbart die Schrift nicht.

Es besteht daher der Bedarf nach thermische Vernetzungen von epoxidbasierten Klebefilmen bei Temperaturen kleiner 120 °C, für besondere Anforderungen sogar für solche Verfahren, bei denen die Klebebänder im Temperaturbereich von 80 °C aushärtbar sind. Typischerweise sind solche Systeme jedoch nicht lagerstabil bei Raumtemperatur.

Aufgabe der vorliegenden Erfindung war es, ein Fügeverfahren zweier Substrate mittels eines epoxidbasierten Klebefilm zu entwickeln, bei dem die zu verklebenden Substrate geschont werden, das also unter milden Verfahrensbedingungen abläuft.

Gelöst werden konnte die Aufgabe insbesondere durch Einsatz eines Klebefilms, der bei Temperaturen von weniger als 120 °C, bevorzugt im Temperaturbereich von 80 bis 100 °C, innerhalb von nicht mehr als 20 Minuten

aushärtbar ist. Bevorzugt wurde ein solcher Klebefilm gewählt, der bei Raumtemperatur - 23 °C - eine siebentägige Lagerung übersteht, ohne signifikant an Reaktivität zu verlieren.

Dementsprechend betrifft die Erfindung ein Verfahren zum Fügen zweier Substrate unter Verwendung eines thermisch härtbaren Klebefilm, umfassend mindestens eine Schicht aus einem Klebstoff, der

mindestens ein mit Epoxid-Gruppen funktionalisiertes (Co)Polymer (A) mit einer gewichtsmittleren Molmasse im Bereich von 5 000 g/mol bis 5 000 000 g/mol und/oder mindestens eine Epoxid-haltige Verbindung (B), die vom (Co)Polymer (A) verschieden ist;

mindestens einen Radikalbildner (C);

mindestens einen Photosäurebildner (D);

gegebenenfalls mindestens ein Matrixpolymer als Filmbildner (E); und

gegebenenfalls mindestens ein Additiv (F) umfasst oder daraus besteht,

dadurch gekennzeichnet, dass

die Aushärtung des Klebefilms bei Temperaturen von weniger als 120 °C stattfindet.

Sehr bevorzugt findet die Aushärtung des Klebefilms in einem Temperaturbereich zwischen 80 °C und 100 °C statt.

Der Klebefilm erfüllt dabei insbesondere zwei sich an sich widersprechende Anforderungen: Zum einen muss eine hinreichende Aktivität vorliegen, damit eine sichere Aushärtung bei den niedrigen Reaktionsbedingungen eintritt und die entsprechenden Verklebungsprodukte eine hinreichende Qualität aufweisen. Zum anderen soll der Klebefilm aber auch eine gewisse Lagerungsfähigkeit aufweisen, um während des Zeitraum zwischen der Herstellung beziehungsweise der Bereitstellung - etwa der Entnahme aus einer Schutzverpackung - und der Anwendung bei den gegebenen Lagerungsbedingungen - insbesondere bei oder im Bereich der Raumtemperatur - hier als 23 °C definiert - nicht bereits zu so wesentlichen Teilen zu härten, dass eine weitere Härtung im Verklebungsprozess nicht mehr stattfinden beziehungsweise nicht mehr in hinreichendem Maße stattfinden würde. Mit anderen Worten soll auch bei der genannten Lagerung die benötigte Reaktivität erhalten bleiben. Hierfür wäre es wünschenswert, dass der Klebefilm bei Raumtemperatur - 23 °C - eine siebentägige Lagerung übersteht, ohne signifikant an Reaktivität zu verlieren. Solche Klebefilme lassen sich unter Kühlung noch deutlich länger lagern, so dass - insbesondere unter Kühlung des Klebefilms - übliche Vertriebswege ohne weiteres realisierbar sind. Diese Bedingungen gelten insbesondere dann als erfüllt, wenn die Anforderungen an das Klebeprodukt auch nach einer solchen Lagerung noch hinreichend erfüllt werden.

Überraschend wurde gefunden, dass sich die Klebesysteme der vorliegenden Erfindung, im Gegensatz zu Systemen, die keinen spezifischen Radikalbildner enthalten und lediglich Photosäurebildner aufweisen, geeignet sind für eine Vielzahl von Anwendungen, bei der die Verklebung von zu fügenden, nicht UV-beständigen und/oder nicht UV durchlässigen Substraten gewünscht ist. Insbesondere ist nun eine Anwendung für schwarze und weiße und/oder mit Füllstoffen und/oder funktionellen Füllstoffen gefüllte Produkte möglich, welche bisher nicht erfolgen konnte, die jedoch von den Kunden sehr erwünscht sind. Das erfindungsgemäße Verfahren ist dabei aufgrund der niedrigen Härtungstemperaturen geeignet, auch temperaturempfindliche Substrate mit hinreichender Verklebungsfestigkeit zu verkleben.

In einer vorteilhaften Ausgestaltung der Erfindung weist der eingesetzte Klebstoff eine Glasübergangstemperatur von nicht mehr als 10 °C auf, um bei Raumtemperatur als im Wesentlichen flexibler Film vorliegen zu können. Bevorzugt ist eine Glasübergangstemperatur zwischen - 20 °C und 0 °C. Beispielsweise kann bei relativ "harter" Komponente A - also einer solchen mit vergleichsweise hoher Glasübergangstemperatur - eine entsprechend "weiche" - also eine niedrige Glastemperatur aufweisende - Komponente (B) (Epoxid-haltige Verbindung) und/oder eine Matrixpolymer-Filmbildner-Komponente (E) vorgesehen sein. Umgekehrt kann beispielsweise dann auf die Komponente (B) und/oder auf die Komponente (E) verzichtet werden, wenn die Komponente (A) bereits im angestrebten GlasübergangstemperaturBereich liegt. Entsprechend lassen sich Mengen an Additiven (F) - wie Weichmacher oder dergleichen - zumischen. Die Einstellung der Glasübergangstemperatur des Klebstoffs gehört zum allgemeinen Fachwissen des einschlägigen Fachmanns.

In einem zweiten Aspekt betrifft die Erfindung einen Verbund, umfassend zwei Substrate, die durch einen Klebefilm oder den Klebstoff gemäß dem Verfahren der vorliegenden Erfindung verklebt werden.

"Mindestens ein", wie hierin verwendet, bezieht sich auf 1 oder mehr, beispielsweise 2, 3, 4, 5, 6, 7, 8, 9 oder mehr. Im Zusammenhang mit Bestandteilen der hierin beschriebenen Verbindung bezieht sich diese Angabe nicht auf die absolute Menge an Molekülen sondern auf die Art des Bestandteils. "Mindestens eine Epoxid-Gruppen-haltige Verbindung" bedeutet daher beispielsweise ein oder mehrere verschiedene Epoxid-Gruppen-haltige Verbindungen, das heißt eine oder mehrere verschiedene Arten von Epoxid-Gruppen-haltigen Verbindungen.

Alle im Zusammenhang mit des hierin beschriebenen Klebstoffs angegeben Mengenangaben beziehen sich, sofern nichts anderes angegeben ist, auf Gew.-% jeweils bezogen auf das Gesamtgewicht des Klebstoffs. Das heißt, dass sich derartige Mengenangaben, beispielsweise im Zusammenhang mit "mindestens eine Epoxid-Gruppen-haltige Verbindung", auf die Gesamtmenge von Epoxid-Gruppen-haltigen Verbindungen, welche in dem Klebstoff enthalten sind, bezieht.

Zahlenwerte, die hierin ohne Dezimalstellen angegeben sind, beziehen sich jeweils auf den vollen angegebenen

Wert mit einer Dezimalstelle. So steht beispielsweise "99 %" für "99,0%".

Der Ausdruck "ungefähr" oder "etwa", in Zusammenhang mit einem Zahlenwert, bezieht sich auf eine Varianz von ± 10% bezogen auf den angegebenen Zahlenwert, vorzugsweise ±5 %, besonders bevorzugt ± 1%.

Die im Folgenden beschriebenen bevorzugten Ausführungsformen für die einzelnen Komponenten (A), (B), (C), (D), (E) und (F) gelten jeweils gleichfalls für das erfindungsgemäße Verfahren als auch für den Verbund aus zwei Substraten und dem Klebefilm sowie für deren jeweiligen Ausführungsvarianten.

Diese und weitere Aspekte, Merkmale und Vorteile der Erfindung werden für den Fachmann aus dem Studium der folgenden detaillierten Beschreibung und Ansprüche ersichtlich. Dabei kann jedes Merkmal aus einem Aspekt der Erfindung in jedem anderen Aspekt der Erfindung eingesetzt werden. Ferner ist es selbstverständlich, dass die hierin enthaltenen Beispiele die Erfindung beschreiben und veranschaulichen sollen, diese aber nicht einschränken und insbesondere die Erfindung nicht auf diese Beispiele beschränkt ist.

Der Begriff "(Co)Polymer" wird im Sinne dieser Erfindung zusammenfassend für Homopolymere oder Copolymere verwendet. Sofern im Rahmen der Schrift von Polymeren gesprochen wird, sind damit (Co)Polymere gemeint, sofern sich aus dem jeweiligen Bezug nichts anderes ergibt.
Unter dem Begriff "(Co)poly(meth)acrylat" sind im Sinne dieser Erfindung Polyacrylat- und Polymethacrylat-Homopolymere oder Copolymere aus (meth)acrylischen Monomeren sowie gegebenenfalls weiteren copolymeriserbaren Comonomeren zu verstehen.
Mit dem Begriff "(Meth)Acrylate" und dem Adjektiv "(meth)acrylisch" werden zusammenfassend die Verbindungen aus der Gruppe aus Acrylsäurederivaten - wie insbesondere Acrylsäureester - und Methacrylsäurederivaten - wie insbesondere Methacrylsäureester - bezeichnet.
"(Co)Polymerisierbar" bedeutet im Sinne dieser Erfindung das Vermögen einer Monomersorte bzw. eines Gemischs zumindest zweier Monomersorten, durch Molmassenaufbau ein (Co)Polymerisat zu bilden.

Erfindungsgemäß wird ein mit Epoxid-Gruppen funktionalisiertes (Co)Polymer (A), welches insbesondere mit einer oder mehreren aliphatischen Epoxid-Gruppen funktionalisiert ist und/oder eine Epoxid-haltige Verbindung (B), welche von (A) verschieden ist, in dem Klebstoff eingesetzt.

<u>(Co)Polymer (A)</u>

Das mit Epoxid-Gruppen funktionalisierte (Co)Polymer (A) wird im Folgenden auch lediglich als (Co)Polymer (A) bezeichnet. Insbesondere bevorzugt ist, dass es sich dabei um ein (meth)acrylisches (Co)Polymer handelt.

Das (Co)Polymer (A) weist in einer vorteilhaften Ausführungsform eine gewichtsmittlere Molmasse von 5 000 g/mol bis 5 000 000 g/mol auf. In weiteren bevorzugten Ausführungsformen beträgt die gewichtsmittlere Molmasse des mit zumindest einer Gruppe eines (Co)Polymers (A) mindestens 10 000 g/mol, sehr bevorzugt mindestens 20 000 g/mol. Weiter bevorzugt beträgt die gewichtsmittlere Molmasse des mit zumindest einer Gruppe eines (Co)Polymers (A) höchstens 500 000 g/mol, bevorzugt 200 000 g/mol sehr bevorzugt höchstens 100 000 g/mol. Die gewichtsmittlere Molmasse wird bevorzugt wie nachstehend im experimentellen Teil mittels GPC bestimmt.

In alternativen bevorzugten Ausführungsformen beträgt die gewichtsmittlere Molmasse des (Co)Polymers (A) mindestens 500 000 g/mol, sehr bevorzugt mindestens 1 000 000 g/mol. Weiter bevorzugt beträgt die gewichtsmittlere Molmasse des (Co)Polymers (A) höchstens 5 000 000 g/mol, bevorzugt 3 500 000 g/mol sehr bevorzugt höchstens 2 000 000 g/mol. Insbesondere, wenn der Klebstoff weniger als 0,5 Gew.-%, bevorzugt weniger als 0,1 Gew.-% eines Matrixpolymers (E) enthält, insbesondere bevorzugt frei von einem Matrixpolymer (E) ist, bezogen auf das Gesamtgewicht des Klebstoffs.

Entsprechend des Anteils in der Gesamtheit der dem (Co)Polymer (A) zugrundeliegenden Monomere haben die mit, bevorzugt aliphatischen, Epoxid-Gruppen funktionalisierten (meth)acrylischen (Co)Monomere (a) beispielweise einen (Co)Monomeranteil im (Co)Polymer (A) von mehr als 5 bis 100 Gew-%, wie etwa von mindestens 10 Gew.-%, sehr bevorzugt von mindestens 25 Gew.-%.

Das Epoxidsauerstoffatom überbrückt bevorzugt in allen oder einigen der Epoxid-Gruppen in zumindest einem Teil der mit, bevorzugt aliphatischen, Epoxid-Gruppen funktionalisierten Monomere eine C-C-Bindung, oder eine C-C-C-Baugruppe oder eine C-C-C-C-Baugruppe.

Das Epoxidsauerstoffatom überbrückt bevorzugt in allen oder einigen der Epoxid-Gruppen in zumindest einem Teil der mit aliphatischen Epoxid-Gruppen funktionalisierten Monomere eine C-C-Bindung, die Bestandteil eines - gegebenenfalls heterosubstituierten - aliphatischen Kohlenwasserstoffrings ist (cycloaliphatische Epoxid-Gruppe).

Es wird bevorzugt ein mit einer aliphatischen Epoxid-Gruppe funktionalisiertes (meth)acrylisches (Co)Monomer (a), somit mindestens ein mit einer aliphatischen, bevorzugt cycloaliphatischen, Epoxid-Gruppe, eingesetzt, beziehungsweise werden, wenn mehrere mit einer aliphatischen Epoxid-Gruppe funktionalisierte (meth)acrylische (Co)Monomere (a) vorhanden sind, für eines, mehrere oder alle dieser mit einer aliphatischen Epoxid-Gruppe funktionalisierten (meth)acrylischen (Co)Monomere (a) cycloaliphatische Epoxide eingesetzt. Insbesondere vorteilhaft werden für mehr als 50 Gew.-% der (Co)Monomere (a) cycloaliphatische Epoxide eingesetzt, besonders bevorzugt werden im Sinne der

(Co)Monomere (a) ausschließlich cycloaliphatische Epoxide eingesetzt.

In einer alternativen Vorgehensweise werden nicht mehr als 50 Gew.-%, bevorzugt nicht mehr als 20 Gew.-%, besonders bevorzugt 3 bis 10 Gew-% cycloaliphatische Epoxide als (Co)Monomere (a) eingesetzt.

Das (Co)Polymer (A) kann zusätzlich zu Monomer (a) eines oder mehrere der folgenden Monomere (b), (c), und (d) aufweisen, und zwar jeweils unabhängig von der Anwesenheit der jeweiligen anderen Monomersorten (b), (c), und (d):

(b) eine oder mehrere Sorten Comonomere mit einer Glasübergangstemperatur von mindestens 25 °C, insbesondere mindestens 50 °C,
beispielweise mit einem Comonomeranteil im Copolymer von 0 Gew-% bis weniger als 95 Gew-%, bevorzugt 0,1 Gew.-% bis höchstens 50 Gew.-%, und/oder
(c) eine oder mehrere Sorten Comonomere mit einer Glasübergangstemperatur von unterhalb 25 °C, insbesondere höchstens 0 °C,
beispielsweise mit einem Comonomeranteil im Copolymer von 0 Gew.-% bis weniger als 95 Gew.-%, bevorzugt 0,1 Gew.-% bis höchstens 50 Gew.-%, und/oder
(d) eine oder mehrere Sorten Comonomere, die zumindest eine andere Funktionalität als eine Epoxy-Gruppe tragen, insbesondere eine Phosphor- oder Silizium-haltige Gruppe, beispielsweise mit einem Comonomeranteil im Copolymer von 0 Gew.-% bis 10 Gew.-%, bevorzugt 0,1 Gew.-% bis 5 Gew.-%.

Vorteilhaft werden die vorstehenden Monomere derart gewählt, dass insgesamt eine Glasübergangstemperatur zwischen - 20 °C und 0 °C erzielt wird.

Mit Monomeranteil bzw. (Co)Monomeranteil wird im Polymer im Rahmen dieser Schrift der Anteil der auf diese (Co)Monomere zurückzuführenden Wiederholungseinheiten (Bausteine) in dem betreffenden Polymer bezeichnet. Die Monomeranteile in der für die Herstellung des entsprechenden Copolymers zu polymerisierenden Polymermischung werden vorteilhaft entsprechend gewählt.

Der Anteil des (Co)Polymers (A) in dem Klebstoff beträgt bevorzugt mindestens 5,0 Gew.-% bis höchstens 99,8 Gew.-%, stärker bevorzugt 10 Gew.-% bis 90 Gew.-%, weiterhin bevorzugt 20 Gew-% bis 80 Gew.-%, weiterhin bevorzugt 30 Gew.-% bis 70 Gew.-%, weiter bevorzugt 40 Gew.-% bis 60 Gew.-%.

<u>(Co)Monomere (a)</u>

Für die (Co)Monomere (a) werden vorteilhaft ganz oder teilweise Monomere der Formel (I)

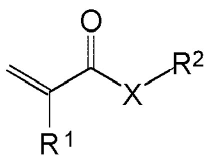

(I)

verwendet, wobei $-R^1$ gleich -H oder $-CH_3$, -X- gleich $-N(R^3)-$ oder-O- , $-R^3$ gleich -H oder $-CH_3$ und $-R^2$ eine Epoxy-funktionalisierte (Hetero)hydrocarbylgruppe darstellen. Dabei weist mindestens ein verwendetes Monomer für $-R^2$ eine Epoxy-funktionalisierte, bevorzugt aliphatische, insbesondere bevorzugt eine cycloaliphatische, Gruppe auf.

Weiter bevorzugt umfasst die Gruppe $R^2$ lineare, verzweigte, cyclische oder polycyclische Kohlenwasserstoffe mit 2 bis 30 Kohlenstoffatomen, welche mit einer aliphatischen Epoxid-Gruppe funktionalisiert sind. Dabei weist bevorzugt mindestens ein verwendetes Monomer für $-R^2$ eine Epoxid-funktionalisierte cycloaliphatische Gruppe mit 5 bis 30 Kohlenstoffatomen auf. Besonders bevorzugte Vertreter dieser Gruppe sind 3,4-Epoxycyclohexyl-substituierte Monomere wie beispielsweise 3,4-Epoxycyclohexylmethylmethacrylat, 3,4-Epoxycyclohexylmethylacrylat, 3,4-Epoxycyclohexylmethacrylat, 3,4-Epoxycyclohexylacrylat. Oxetan-haltige (Meth)acrylate und Oxolan-haltige (Meth)acrylate sind ebenso einsetzbar.

Optional einsetzbare Comonomere (b)

Comonomere (b) weisen insbesondere keine Epoxy-Gruppen auf. Im Sinne der Comonomere (b) sind alle dem Fachmann bekannten - insbesondere epoxygruppenfreie - (Meth)Acrylat-Monomere und andere copolymerisierbaren Vinylmonomere einsetzbar, die mit (Co)Monomeren (a) und gegebenenfalls vorhandenen Comonomeren (c) und/oder (d) und/oder (e) copolymerisierbar sind und die eine Glasübergangstemperatur als hypothetisches Homopolymer (in diesem Zusammenhang ist die Glasübergangstemperatur des Homopolymeren aus den entsprechenden Monomeren im molmassenunabhängigen Glasübergangstemperaturbereich, $T_G^{\infty}$, gemeint) von mindestens 25 °C, insbesondere

mindestens 50 °C aufweisen. Solche Monomere werden im Rahmen dieser Schrift auch als "harte Monomere" bezeichnet. Zur Auswahl solcher Comonomere kann z. B. das Polymer Handbook (J. Brandrup, E. H. Immergut, E. A. Grulke (Hrsg.), 4. Aufl., 1999, J. Wiley, Hoboken, Bd. 1, Kapitel VI/193) konsultiert werden. Vorteilhaft einsetzbar sind auch sogenannte Makromere nach WO 2015/082143 A1. Bevorzugt werden Comonomere, die durch ihre chemische Bauart im Wesentlichen vor der Initiierung der Härtungsreaktion keine Reaktivität mit den Epoxid-Funktionalitäten der (Co)Monomere (a) aufweisen oder initiierend oder katalysierend in Bezug auf eine Reaktion der Epoxid-Funktionalitäten wirken oder ihre Reaktivität mit Epoxid-Funktionalitäten anderweitig unterbunden ist.

Optional einsetzbare Comonomere (c)

Comonomere (c) weisen insbesondere keine Epoxy-Gruppen auf. Im Sinne der Comonomere (c) sind alle dem Fachmann bekannten - insbesondere epoxygruppenfreie - (Meth)Acrylat-Monomere und andere copolymerisierbare Vinylmonomere einsetzbar, die mit (Co)Monomeren (a) und gegebenenfalls vorhandenen Comonomeren (b) und/oder (d) copolymerisierbar sind, und die eine Glasübergangstemperatur als hypothetisches Homopolymer (in diesem Zusammenhang ist die Glasübergangstemperatur des Homopolymeren aus den entsprechenden Monomeren im molmassenunabhängigen Glasübergangstemperaturbereich, $T_G^{\infty}$, gemeint) von unterhalb 25 °C, insbesondere höchstens 0 °C besitzen. Solche Monomere werden im Rahmen dieser Schrift auch als "weiche Monomere" bezeichnet. Zur Auswahl solcher Comonomere kann beispielweise das Polymer Handbook (J. Brandrup, E. H. Immergut, E. A. Grulke (Hrsg.), 4. Aufl., 1999, J. Wiley, Hoboken, Bd. 1, Kapitel VI/193) konsultiert werden. Vorteilhaft einsetzbar sind auch sogenannte Makromere nach WO 2015/082143 A1. Bevorzugt werden Comonomere, die durch ihre chemische Bauart vor der Initiierung der Härtungsreaktion im Wesentlichem nicht initiierend oder katalysierend in Bezug auf eine Reaktion der Epoxid-Funktionalitäten wirken, insbesondere die keine Reaktivität mit den Epoxid-Funktionalitäten der (Co)Monomere (a) aufweisen und/oder deren Reaktivität mit Epoxid-Funktionalitäten anderweitig unterbunden ist.

Optional einsetzbare Comonomere (d)

Im Sinne der Comonomere (d) können ferner solche Monomere zum Einsatz kommen, die mit (Co)Monomeren (a) und gegebenenfalls vorhandenen Comonomeren (b) und/oder (c) copolymerisierbar sind und die die adhäsiven Eigenschaften des erfindungsgemäßen Copolymers optimieren. In diesem Zusammenhang sind insbesondere Phosphor-haltige und Silizium-haltige Comonomere und hier acrylierte oder methacrylierte Alkoxysilanhaltige Comonomere als vorteilhaft zu nennen. Beispiele sind 3-(Triethoxysilyl)propylmethacrylat, 3-(Triethoxysilyl)-propylacrylat, 3-(Trimethoxysilyl)propylacrylat, 3-(Trimethoxysilyl)propylmethacrylat, Methacryloxymethyltriethoxysilan, (Methacryloxymethyl)trimethoxysilan, (3-Acryloxypropyl)methyl-dimethoxysilan, (Methacryloxymethyl)methyldimethoxysilan, γ-Methacryloxypropylmethyldimethoxysilan, Methacryloxypropylmethyldiethoxysilan, 3-(Dimethoxymethylsilyl)propylmethacrylat, Methacryloxypropyldimethylethoxysilan, Methacryloxypropyldimethylmethoxysilan. Von den vorgenannten Verbindungen sind 3-(Triethoxysilyl)propylmethacrylat, 3-(Triethoxysilyl)-propylacrylat, 3-(Trimethoxysilyl)propylacrylat und 3-(Trimethoxysilyl)propylmethacrylat besonders bevorzugt. Auch die Comonomere (d) weisen bevorzugt keine Glycidylether- oder Epoxy-Gruppen auf. Bevorzugt beträgt der Anteil an Comonomeren (d) höchstens 10 Gew.-% bezogen auf das Gesamtgewicht des Copolymers. In einer vorteilhaften Auslegung dieser Erfindung enthält ein (Co)Polymer Comonomer (d). In einer weiteren vorteilhaften Auslegung dieser Erfindung wird komplett auf Comonomere (d) verzichtet.

Das (Co)Polymer (A) enthält in einer bevorzugten Ausführungsform keine Si haltigen Monomere. In einer weiteren bevorzugten Ausführungsform ist das (Co)Polymer (A) haftklebrig.

Durch fachmännische Auswahl Zusammenstellung der Comonomerzusammensetzung und der jeweils gewählten Mengen lassen sich vorteilhaft solche (Co)Polymere erzeugen, die eine Glasübergangstemperatur zwischen - 20 °C und 0 °C aufweisen.

**Herstellung**

Die Herstellung der (Co)Polymere (A) erfolgt durch (Co)Polymerisation der zugrundeliegenden (Co)Monomere und kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (zum Beispiel Hexan, Heptan, Octan, Isooctan, Isohexan, Cyclohexan), aromatische Kohlenwasserstoffe (zum Beispiel Benzol, Toluol, Xylol), Ester (zum Beispiel Essigsäureethylester, Essigsäurepropyl-, -butyl- oder - hexylester), halogenierte Kohlenwasserstoffe (zum Beispiel Chlorbenzol), Alkanole (zum Beispiel Methanol, Ethanol, Ethylenglycol, Ethylenglycolmonomethylether), Ketone (z. B. Aceton, Butanon) und Ether (zum Beispiel Diethylether, Dibutylether) oder Gemische davon. Es wird auf Verbindungen verzichtet, die mit Epoxid-Funktionalitäten vor der Initiierung der Härtungsreaktion reagieren können oder die Reaktion von Epoxid-Funktionalitäten initiieren oder katalysieren können oder ihre

Reaktivität mit Epoxid-Funktionalitäten anderweitig unterbunden ist.

Die wässrigen Polymerisationsreaktionen können mit einem mit Wasser mischbaren oder hydrophilen Colösungsmittel versetzt werden, um zu gewährleisten, dass das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Polyethylenglycolen, Polypropylenglycolen, Estern, Alkoholderivaten, Hydroxyetherderivaten, Ketonen und dergleichen, sowie Derivaten und Gemischen davon. Es wird auf Verbindungen verzichtet, die mit Epoxid-Funktionalitäten reagieren können und/oder die die Reaktion von Epoxid-Funktionalitäten initiieren oder katalysieren können und/oder deren Reaktivität mit Epoxid-Funktionalitäten nicht anderweitig unterbunden ist.

Zur Herstellung der erfindungsgemäßen (Co)Polymere (A) werden vorteilhaft konventionelle radikalische Polymerisationen oder kontrollierte radikalische Polymerisationen durchgeführt. Für die radikalisch verlaufenden Polymerisationen werden bevorzugt Initiatorsysteme eingesetzt, die radikalische Initiatoren zur Polymerisation (Polymerisationsinitiatoren) enthalten, insbesondere thermisch zerfallende radikalbildende Azo- oder Peroxoinitiatoren. Prinzipiell eignen sich jedoch alle für Acrylate und/oder Methacrylate dem Fachmann geläufigen, üblichen Polymerisationsinitiatoren. Die Produktion von C-zentrierten Radikalen ist im Houben-Weyl, Methoden der Organischen Chemie, Vol. E 19a, S. 60-147, beschrieben. Diese Methoden werden in bevorzugter Weise in Analogie angewendet.

Die im Zusammenhang mit der Herstellung der (Co)polymere (A) genannten radikalischen Polymerisationsinitiatoren sind nicht zu verwechseln mit den für die Härtung des härtbaren Klebstoffs zum Einsatz kommenden Härtern beziehungsweise Aktivatoren.

Beispiele für Radikalquellen sind Peroxide, Hydroperoxide und Azoverbindungen. Als einige nicht ausschließliche Beispiele für typische Radikalinitiatoren seien hier genannt Kaliumperoxodisulfat, Dibenzoylperoxid, Cumolhydroperoxid, Cyclohexanonperoxid, Ditert-butylperoxid, Azobisiisobutyronitril, Cyclohexylsulfonylacetylperoxid, Diisopropylpercarbonat, tert-Butylperoktoat, Benzpinacol. Besonders bevorzugt wird als radikalischer Polymerisationsinitiator 2,2'-Azobis(2-methylbutyronitril) oder 2,2-Azobis-(2,4-dimethylvaleronitril) verwendet.

Die Polymerisationszeit beträgt -je nach Temperatur und gewünschtem Umsatz - zwischen 4 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Polymerisationsinitiatoren der Eintrag von Wärme essentiell. Die Polymerisation kann für die thermisch zerfallenden Polymerisationsinitiatoren durch Erwärmen auf 50 °C oder mehr, je nach Initiatortyp, initiiert werden. Bevorzugt wird eine Initiierungstemperatur von höchstens 100 °C, sehr bevorzugt von höchstens 80 °C.

Zur Radikalstabilisierung werden in günstiger Vorgehensweise Nitroxide eingesetzt, wie z. B. (2,2,5,5-Tetramethyl-1-pyrrolidinyl)oxyl (PROXYL), (2,2,6,6-Tetramethyl-1-piperidinyl)oxyl (TEMPO), Derivate des PROXYLs oder des TEMPOs und weitere dem Fachmann geläufige Nitroxide.

Eine Reihe weiterer Polymerisationsmethoden, nach denen die Klebstoffe in alternativer Vorgehensweise hergestellt werden können, lassen sich aus dem Stand der Technik wählen: WO 96/24620 A1 beschreibt ein Polymerisationsverfahren, bei dem sehr spezielle Radikalverbindungen wie z. B. phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterocyclische Alkoxyamine als Regulatoren in kontrolliert radikalischen Polymerisationen.

Als weitere kontrollierte Polymerisationsmethode lässt sich die Atom Transfer Radical Polymerization (ATRP) einsetzen, wobei als Polymerisationsinitiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe eingesetzt werden. Die unterschiedlichen Möglichkeiten der ATRP sind ferner in den Schriften der US 5,945,491 A, der US 5,854,364 A und der US 5,789,487 A beschrieben.

Als weiterer Herstellprozess wird eine Variante der RAFT-Polymerisation (reversible addition-fragmentation chain transfer polymerization) durchgeführt. Der Polymerisationsprozess ist z. B. in den Schriften WO 98/01478 A1 und WO 99/31144 A1 ausführlich beschrieben. Zur Herstellung eignen sich besonders vorteilhaft Trithiocarbonate der allgemeinen Struktur R'''-S-C(S)-S-R''' (Macromolecules, 2000, 33, 243-245).

In einer sehr vorteilhaften Variante werden beispielsweise die Trithiocarbonate (TTC1) und (TTC2) oder die Thioverbindungen (THI1) und (THI2) zur Polymerisation eingesetzt, wobei Φ ein Phenylring, der unfunktionalisiert oder durch Alkyl- oder Arylsubstituenten, die direkt oder über Ester- oder Etherbrücken verknüpft sind, funktionalisiert sein kann, eine Cyanogruppe oder ein gesättigter oder ungesättigter aliphatischer Rest sein kann. Der Phenylring Φ kann optional einen oder mehrere Polymerblöcke, beispielsweise Polybutadien, Polyisopren oder Polystyrol tragen, um nur einige zu nennen.

Funktionalisierungen können beispielsweise Halogene, Hydroxygruppen, Epoxidgruppen sein, ohne dass diese Aufzählung Anspruch auf Vollständigkeit erhebt.

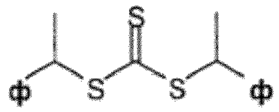

(TTC 1)

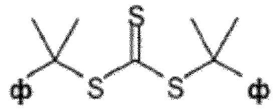

(TTC 2)

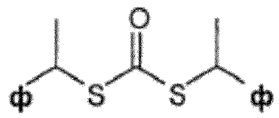

(THI 1)

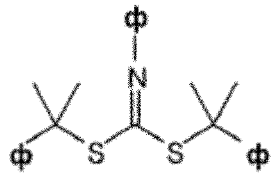

(THI 2)

In Verbindung mit den oben genannten kontrolliert radikalisch verlaufenden Polymerisationen werden Polymerisationsinitiatorsysteme bevorzugt, die radikalische Polymerisationsinitiatoren enthalten, insbesondere die schon zuvor aufgezählten thermisch zerfallenden radikalbildenden Azo- oder Peroxoinitiatoren. Prinzipiell eignen sich hierfür jedoch alle für Acrylate und/oder Methacrylate bekannten üblichen Polymerisationsinitiatoren. Weiterhin können auch Radikalquellen verwendet werden, die erst unter UV-Bestrahlung Radikale freisetzen. Maßgeblich ist, dass diese Polymerisationsinitiatoren keine Reaktion der Epoxid-Funktionalitäten aktivieren können.

Zum Zwecke der Molmasseneinstellung können auch Kettenübertragungsreagenzien nach dem Stand der Technik verwendet werden, sofern sie keine Reaktivität gegenüber Epoxidgruppen aufweisen oder ihre Reaktivität mit Epoxidgruppen anderweitig unterbunden ist.

Die gewünschte Molmasse wird bevorzugt durch Polymerisationsverfahren, seien es kontrollierte Polymerisationsverfahren oder nicht kontrollierte Polymerisationsverfahren, eingestellt, bei denen keine Mittel eingesetzt werden, die vor der Initiierung der Härtungsreaktion des Klebefilms mit Epoxid-Funktionalitäten reagieren können oder die Reaktion von Epoxid-Funktionalitäten initiieren oder katalysieren können oder ihre Reaktivität mit Epoxid-Funktionalitäten anderweitig unterbunden ist.

Die Einstellung der gewünschten Molmasse kann zudem und zwar besonders bevorzugt über das Einsatzverhältnis von Polymerisationsinitiatoren und (Co)Monomer(en) und/oder die Konzentration an (Co)Monomeren realisiert werden.

In besonders bevorzugter Vorgehensweise können als mit Epoxid-Gruppen funktionalisierte (Co)Polymere (A) auch Oligomere oder Polymere - insbesondere niedrigeren Molekulargewichts - (zusammen "Präpolymere") des kommerziell erhältlichen Produkts UVACURE 1500 der Firma Solvay (3,4-Epoxycyclohexyl-methyl-3,4-epoxycyclohexancarboxylat) verwendet werden; weiterhin auch Präpolymere von 3,4-Epoxycyclohexylmethacrylat. Die vorgenannten Verbindungen seien nur als Beispiele genannt und sind nicht einschränkend zu verstehen.

Unter Präpolymeren werden solche reaktiven Oligomere und Polymere insbesondere geringen Molekulargewichts verstanden, die zur Herstellung der Polymere (Makromolekülen) für die erfindungsgemäß genutzten Klebmasse dienen können. Sie sind dementsprechend Vorprodukte, die insbesondere noch löslich sein können.

Epoxid-Gruppen enthaltende Verbindung (B)

Besonders bevorzugt sind Glycidylether-Gruppen-haltige (Co)Polymere (B1) und/oder andere Glycidylether (B2) und/oder Epoxide (B3). Vorteilhaft einsetzbar sind auch epoxidierte Acrylnitril-Butadien-Kautschuke (B4).

Glycidylether-Gruppen-haltige (Co)Polymere (B1) können analog zu den vorstehend beschriebenen (Co)Polymeren (A) erhalten werden, lediglich das Monomer (a) wird durch ein Glycidylether-Gruppen-haltiges Monomer (e) ersetzt oder um ein Glycidylether-Gruppen-haltiges Monomere (e) ergänzt. Insbesondere bevorzugt sind Glycidylacrylat oder Glycidylmethacrylat als Monomere (e). Alle bevorzugten Ausführungsformen für das vorstehend beschriebene (Co)Polymer (A) hinsichtlich der Monomere (b), (c) und (d) sowie der Eigenschaften des (Co)Polymers wie beispielsweise der gewichtsmittleren Molmasse sind wie für (A) vorstehend beschrieben bevorzugt. So liegt diese typischerweise bei mindestens 5000 g/mol und höchstens 5 000 000 g/mol.

Bevorzugte Glycidylether (B2) sind mindestens difunktionell oder tri-, tetra oder höher funktionell in Bezug auf die in der Verbindung enthaltenen Glycidylether-Gruppen und weisen ein Molekulargewicht von 58 bis unterhalb 5.000 g/mol, bevorzugt 58 bis 1.000 g/mol auf. Geeignet sind beispielsweise Diglycidylether eines Polyoxyalkylenglycols oder Glycidylethermonomere. Beispiele sind die Glycidylether von mehrwertigen Phenolen, die durch Reaktion eines mehrwertigen Phenols mit einem Überschuss an Chlorhydrin, wie Epichlorhydrin (z. B. der Diglycidylether von 2,2-Bis-(2,3-

epoxypropoxyphenol)propan), erhalten werden.

Weitere einsetzbare Beispiele sind Tetrahydrophthalsäurediglycidylester und Derivate, Hexahydrophthalsäurediglycidylester und Derivate, 1,2-Ethandiglycidylether und Derivate, 1,3- Propandiglycidylether und Derivate, 1,4-Butandioldiglycidylether und Derivate, höhere 1,n-Alkandiglycidylether und Derivate, 4,5-Epoxytetrahydrophthalsäurediglycidylester und Derivate, Bis-[1-ethyl(3-oxetanyl)methyl)ether und Derivate, Pentaerythritoltetraglycidylether und Derivate, Bisphenol-A-Digylcidylether (DGEBA), hydriertes Bisphenol-A-Diglycidylether, Bisphenol-F-Diglycidylether, hydriertes Bisphenol-F-Diglycidylether, Epoxyphenol-Novolaks, hydrierte Epoxyphenol-Novolaks, Epoxycresol-Novolaks, hydrierte Epoxycresol-Novolaks, 2-(7-Oxabicyclospiro(1,3-dioxan-5,3'-(7-oxabicyclo[4.1.0]-heptan)), 1,4-Bis((2,3- epoxypropoxy)methyl)cyclohexan.

Bevorzugte Epoxide (B3) enthaltenen Epoxid-Gruppen, weisen ein Molekulargewicht von 58 bis unterhalb 5.000 g/mol, bevorzugt 58 bis 1.000 g/mol auf und sind von (B2) verschieden.

Bevorzugte epoxidierte Acrylnitril-Butadien-Kautschuke sind etwa solche mit Bisphenol-F-diglycidylether oder Bisphenol-A-diglycidylether als Epoxidbasis

Der Anteil von (B) in dem Klebstoff beträgt in einer bevorzugten Ausführung mindestens 5,0 Gew.-% bis höchstens 99,8 Gew.-%, stärker bevorzugt 10 Gew.-% bis 50 Gew.-%, weiterhin bevorzugt 20 Gew-% bis 40 Gew.-%.

Sollten sowohl (A) als auch (B) enthalten sein, so beträgt deren gesamter Anteil bevorzugt mindestens 5,0 Gew.-% bis höchstens 99,8 Gew.-%, stärker bevorzugt 10 Gew.-% bis 50 Gew.-%, weiterhin bevorzugt 20 Gew-% bis 40 Gew.-%.

In einer bevorzugten Ausgestaltung der Erfindung wird als Verbindung B 3,4-Epoxycyclohexyl-methyl-3,4-epoxycyclohexan-carboxylat eingesetzt, da in DSC-Messungen und in der IR-Spektroskopie einerseits eine hohe Reaktivität nachgewiesen wurde und andererseits ein hoher Umsatz gezeigt wurde. Auch 3,4-Epoxycyclohexylmethacrylat ist als Verbindung (B) hervorragend geeignet.

Radikalbildner (C)

Ferner enthält der Klebstoff mindestens einen spezifischen Radikalbildner (C)

Der Radikalbildner (C) gemäß der vorliegenden Erfindung enthält bevorzugt mindestens zwei Organylgruppen.

Insbesonders geeignete Radikalbildner (C) sind - alternativ zu vorstehender Charakterisierung durch zwei Organylgruppen oder insbesondere zusätzlich hierzu - Peroxide (C1).

Die Peroxide (C1) sind insbesondere solche, die an jedem Sauerstoffatom eine Organylgruppe tragen. Als Peroxide werden dementsprechend bevorzugt Verbindungen der allgemeinen Struktur R-O-O-R' eingesetzt, wobei es sich bei den Resten R und R' um Organylgruppen handelt, die unabhängig voneinander gewählt sein oder auch identisch sein können , und wobei R und R' auch miteinander verbunden sein können, so dass über die Peroxy-Gruppe (-O-O-) ein Zyklus mit R und R' gebildet ist. Das Peroxid (C1) weist bevorzugt in Lösung eine 1-Minuten-Halbwertszeittemperatur von weniger als 200 °C auf.

Als Organylgruppen werden organische Reste - unabhängig davon, welche funktionelle Gruppe darin enthalten ist - mit einer oder seltener mehreren freien Valenzen an einem Kohlenstoffatom bezeichnet. Beispiele hierfür sind Acetonylgruppen, Acylgruppe (zum Beispiel Acetylgruppen, Benzoylgruppen), Alkylgruppen (zum Beispiel Methylgruppen, Ethylgruppen), Alkenylgruppe (zum Beispiel Vinylgruppen, Allylgruppen), Alkinylgruppen (Propargylgruppen), Aminocarbonylgruppen, Ampicilloylgruppen (Reste, abgeleitet von Ampicillin), Arylgruppen (zum Beispiel Phenylgruppen, 1-Naphthylgruppen, 2-Naphthylgruppen, 2-Thiophenylgruppen, 2,4-Dinitrophenylgruppen), Alkylarylgruppen (zum Beispiel Benzylgruppen, Triphenylmethylgruppen), Benzyloxycarbonyl-Gruppen (Cbz), tert-Butoxycarbonylgruppen (Boc), Carboxygruppen, (Fluoren-9-ylmethoxy)carbonylgruppen (Fmoc), Furfurylgruppen, Glycidylgruppen, Halogenalkylgruppen (zum Beispiel Chlormethylgruppen, 2,2,2-Trifluorethylgruppen), Indolylgruppen, Nitrilgruppen, Nucleosidylgruppen, Tritylgruppen, um nur einige zu nennen.

Peroxide der allgemeinen Struktur R-O-O-R' (auch in cyclischer Form) haben beispielsweise im Vergleich zu den Hydroperoxiden den Vorteil, dass sie bei der thermischen Aktivierung des Klebstoffs kein Wasser im Sinne primärer Spaltprodukte freisetzen. In einer erfindungsgemäßen Ausführung ist es bevorzugt, flüchtige Bestandteile mit Siedepunkten unterhalb von 50 °C, bevorzugt solche mit Siedepunkten unterhalb von 100 °C, weitest möglich zu reduzieren, bevorzugt vollständig zu vermeiden, um insbesondere eine Blasenbildung in der Klebestelle und damit deren Schwächung zu vermeiden. Dementsprechend sind R und R' der erfindungsgemäßen Peroxide insbesondere bevorzugt derart zu wählen, dass auch diese nicht zur Bildung leicht flüchtiger primärer Spaltprodukte - wie beispielsweise Kohlenstoffdioxid, Isopropanol - führen.

Erfindungsgemäß wird der zumindest eine Radikalbildner, beziehungsweise werden die mehreren eingesetzten Radikalbildner, bevorzugt derart gewählt, dass es bei erhöhten Temperaturen - Temperaturen oberhalb ihrer Aktivierungstemperatur - vergleichsweise hohe Zerfallsgeschwindigkeiten beziehungsweise geringe Halbwertszeiten [$t_{1/2}$] besitzt. Die Zerfallsgeschwindigkeit der Radikalbildner ist ein kennzeichnendes Kriterium für deren Reaktivität und wird durch die Angabe der Halbwertszeiten bei bestimmten Temperaturen [$t_{1/2}(T)$] quantifiziert, wobei die Halbwertszeit wie

üblich die Zeit darstellt, nach der die Hälfte des Radikalbildners bei den vorgegebenen Bedingungen zerfallen ist. Je höher die Temperatur, desto geringer ist in der Regel die Halbwertszeit des Zerfalls. Je höher also die Zerfallsgeschwindigkeit, desto geringer ist die Halbwertszeit. Als Halbwertszeittemperatur [$T(t_{1/2})$] wird die Temperatur bezeichnet, bei der die Halbwertszeit einem vorgegebenen Wert entspricht, so ist beispielsweise die 10-Stunden-Halbwertszeittemperatur [$T(t_{1/2}$=10h)] die Temperatur, bei der die Halbwertszeit des untersuchten Stoffs gerade 10 Stunden beträgt, die 1-Minuten-Halbwertszeittemperatur [$T(t_{1/2}$=1min)] diejenige Temperatur, bei der die Halbwertszeit des untersuchten Stoffs gerade 1 Minute beträgt, und entsprechend.

In bevorzugten Ausführungsformen wird der zumindest eine Radikalbildner, beziehungsweise werden die mehreren eingesetzten Radikalbildner, derart gewählt, dass die 10-Minuten-Halbwertszeittemperatur $T(t_{1/2}$=10min) in Lösung 110 °C nicht überschreitet, bevorzugt 90 °C nicht überschreitet, sehr bevorzugt 80 °C nicht überschreitet.

Die vorstehende Bedingung gilt insbesondere als erfüllt, wenn das betreffende Peroxid zumindest in Monochlorbenzen (Lösung 0,1 molar) einen entsprechenden Halbwertszeittemperatur-Wert aufweist. Solche Halbwertszeiten lassen sich experimentell ermitteln (Konzentrationsermittlung mittels DSC beziehungsweise Titration) und sind auch der einschlägigen Literatur entnehmbar. Die Halbwertszeiten sind auch durch Berechnung erhältlich aus den für das jeweilige Peroxid spezifischen Konstanten Arrhenius-Frequenzfaktor und Zerfalls-Aktivierungsenergie für die jeweils vorgegebenen Bedingungen. Dabei gelten die folgenden Beziehungen:

$$- dc/dt = k \cdot c \qquad [1]$$

$$\ln (c_1/c_0) = -k \cdot t \qquad [2]$$

$$t_{1/2} = \ln 2/k \qquad \text{für } c_t(t_{1/2}) = c_0/2 \qquad [3\}$$

$$k = A \cdot e^{-Ea/RT} \qquad [4]$$

wobei

co = Ausgangskonzentration
$c_t$ = Konzentration zum Zeitpunkt t
$c_t(t_{1/2})$ = Konzentration zur Halbwertzeit
$t_{1/2}$ = Halbwertszeit
k = Zerfallskonstante
A = Arrhenius-Frequenzfaktor
Ea = Aktivierungsenergie für den Peroxidzerfall
R = allgemeine Gaskonstante (R = 8,3142 J/(mol·K))
T = absolute Temperatur

Die in dieser Schrift genannten Halbwertszeiten und die Halbwertszeittemperaturen beziehen sich jeweils auf eine 0,1 molare Lösung des entsprechenden Peroxids in Monochlorbenzen, sofern nicht im Einzelnen etwas anderes angegeben ist.

Über die für die jeweiligen Bedingungen - wie etwa das eingesetzte Lösemittel - recherchierbaren oder aus recherchierbaren Werten errechenbaren Konstanten Arrhenius-Frequenzfaktor und Zerfalls-Aktivierungsenergie lassen sich die Halbwertszeiten und die Halbwertszeittemperaturen auf jeweils andere Bedingungen - wie etwa in anderen Lösemitteln - umrechnen und somit vergleichbar machen.

Bevorzugt werden solche Radikalbildner eingesetzt, die bei Temperaturen bis zu 30 °C eine Verarbeitungszeit von mindestens 24 h erlauben. Hiermit kann ein Stanzverfahren ohne größeren Aktivierungsverlust bei Raumtemperatur durchgeführt werden. Entsprechend wird der zumindest eine Radikalbildner, beziehungsweise werden die mehreren eingesetzten Radikalbildner, bevorzugt derart gewählt, dass seine beziehungsweise ihre Halbwertszeit bei 30 °C mindestens 5 Tage, bevorzugt mindestens 100 Tage, besonders bevorzugt mindestens 500 Tage beträgt beziehungsweise betragen. So wird ermöglicht, dass das thermisch aktivierbare Klebeband bei 30 °C eine hinreichende Verarbeitungs- und Applikationszeit aufweist, indem nach 24 Stunden noch mindestens 90 % des ursprünglich eingesetzten Radikalbildners (entsprechend $t_{1/2}$ = 6,5 d), insbesondere noch mindestens 97% (entsprechend $t_{1/2}$ = 20 d), bevorzugt noch mindestens 99 % (entsprechend $t_{1/2}$ = 76 d), besonders bevorzugt noch mindestens 99,8 % des eingesetzten Radikalbildners vorhanden sind und somit noch nicht für eine Reaktion zur Verfügung standen.

Um ein lagerstabiles System zu garantieren, muss ein entsprechendes Produkt gekühlt gelagert und transportiert werden. Dementsprechend sollte die Halbwertszeit bei üblichen Bedingungen - die üblicherweise bis zu 5 °C betragen können - hoch sein. Daher sollten die eingesetzten Radikalbildner bevorzugt derart gewählt werden, dass ihre Halbwertzeit bei der Kühltemperatur von bevorzugt bis zu 5 °C hinreichend groß ist, dass nach 9 Monaten (274 Tagen) noch mind. 70 %, bevorzugt 85 %, besonders bevorzugt 95 % oder ganz besonders bevorzugt mehr als 95 % des Radikalbildners für die Vernetzung zur Verfügung stehen. Die entsprechenden Halbwertszeiten lassen sich mit den oben genannten Beziehungen ermitteln.

Beispiele für erfindungsgemäß besonders geeignete Radikalbildner sind insbesondere die folgenden Peroxide: Bisisobutyrylperoxid, 1-Methyl-1-phenylethylperoxyneodecanoat, Bis(3-methoxybutyl)peroxy-dicarbonat, 1,1,3,3-Tetramethylbutylperoxyneodecanoat, Cumylperoxyneoheptanoat, tert-Pentyl-peroxyneodecanoat, Di-(4-tert-butylcyclohexyl)-peroxydicarbonat, tert-Amylperoxy-2-ethylhexanoat.

Der beziehungsweise die eingesetzten Radikalbildner werden - insbesondere abhängig von ihrer Reaktivität - bevorzugt in einer Menge gewählt, dass die resultierende mit dem Klebefilm bewirkte Verklebung die gewünschten Eigenschaften aufweist und insbesondere die weiter unten näher definierten Spezifizierungen in den Push-Out-Tests erfüllt. Die erfindungsgemäß eingesetzten Klebstoffe und die entsprechenden Klebefilme sind latent-reaktiv. Als latent-reaktiv werden im Sinne dieser Erfindung solche aktivierbaren Klebesysteme bezeichnet, die unter Kühlung ohne Aktivierung über längere Zeiträume stabil lagerbar sind. Latent-reaktive Klebefilme sind bevorzugt solche, die bei Lagertemperaturen von 5 °C nicht oder nur über einen Zeitraum von mehreren Wochen, bevorzugt Monaten aushärten und damit lagerstabil sind, die aber bei höheren Temperaturen - insbesondere bei Aktivierungstemperaturen von 80 °C bis 100 °C - aktivierbar sind und aushärten und/oder vernetzen.

Besonders bevorzugte latent-reaktive Klebefilme sind noch bei Normalklima (23 °C [296,15 K]; 50 % r.F.) über einen Zeitraum von mehreren Wochen lagerstabil.

Die latente Reaktivität bietet den Vorteil, dass diese Klebefilme bei den jeweiligen Lagerungsbedingungen gelagert, transportiert und weiter verarbeitet (beispielweise konfektioniert) werden können, bevor sie dann an der Verklebungsstelle zum Einsatz kommen und ausgehärtet werden.

Dabei sollen sich die Klebstoffe während der Lagerzeit nicht signifikant verändern, so dass die Verklebungseigenschaften eines frisch nach der Herstellung zur Verklebung angewendeten Klebstoffsystems und eines nach längerer Lagerung für die ansonsten vergleichbare Verklebung angewendeten Klebstoffsystems nicht wesentlich unterscheiden, insbesondere mindestens jedoch noch dem Anforderungsprofil entsprechen (Push-Out > 1,5 MPa), bevorzugt noch mindestens 50 %, besonders bevorzugt noch mindestens 75 %, ganz besonders bevorzugt noch mindestens 90 % der Performance des nicht gelagerten Klebefilms aufweisen.

Die erfindungsgemäßen Zusammensetzungen zeichnen sich dadurch aus, dass sie einerseits - gegebenenfalls unter Kühlung -latentreaktiv sind, andererseits jedoch bereits bei mäßiger Temperatur schnell härtbar sind. Um diese Anforderungen zu erfüllen, haben sich Radikalbildnermengen von minimal 0,1 Gew.-%, vorteilhaft minimal 1 Gew.-%, besonders vorteilhaft minimal 2 Gew.-%, ganz besonders vorteilhaft minimal 3 Gew.-%, und von maximal 10 Gew.-%, bevorzugt maximal 8 Gew.-%, sehr bevorzugt maximal 7 Gew.-% als sehr vorteilhaft herausgestellt.

Photosäurebildner (D)

Photosäurebildner (auch "Photokationenerzeuger" oder "Photoinitiatoren" genannt) sind dem Fachmann geläufig, vorzugsweise wird mindestens einer der im Folgenden aufgeführten Verbindungen, verwendet.

Vorteilhaft für das System ist ein Photosäurebildner (D), der ein Iodonium-Ion und/oder ein Antimonat-, Phosphat-, Aluminat- oder Borat-Ion beinhaltet

Es ist von Vorteil, wenn solche Photosäurebildner gewählt werden, die kein Sulfonium-Ion beinhalten, da diese eine radikalisch induzierte kationische Polymerisation (RICP) inhibieren könnten.

Als Photosäurebildner für eine kationische UV induzierte Härtung sind insbesondere Iodonium- und Metallocenbasierende Systeme einsetzbar.

Beispielsweise können Aryliodoniumsalze $(C_6H_5)RI^+ LX^-$ gut eingesetzt werden, wobei R ein organisches Radikal ist, hierbei insbesondere Diaryliodoniumsalze $(C_6H_5)_2I^+ LX^-$. Auch Triarylsulfoniumsalze $(C_6H_5)_3S^+ LX^-$ sind für die Anwendung als kationische Photoinitiatoren bekannt; diese bilden in Gegenwart von Protonendonatoren starke (Brönstedt-)Säuren, welche ebenfalls für die Initiierung von kationischen Polymerisationen und für das erfinderische Verfahren gut geeignet sind.

Als Beispiele für Anionen, die als Gegenionen dienen, seien Tetrafluoroborat, Tetraphenylborat, Hexafluorophosphat, Perchlorat, Tetrachloroferrat, Hexafluoroarsenat, Hexafluoroantimonat, Pentafluorohydroxyantimonat, Hexachloroantimonat, Tetrakispentafluorophenylborat, Tetrakis-(pentafluoromethylphenyl)-borat, Bi-(trifluoromethylsulfonyl)-amide und Tris-(trifluoromethylsulfonyl)-methide genannt. Ferner sind insbesondere für Iodonium-basierende Initiatoren auch Chlorid, Bromid oder Iodid als Anionen denkbar, wobei aber Initiatoren, die im Wesentlichen frei von Chlor und Brom sind, bevorzugt sind.

Beispiele für bevorzugte Photosäurebildner sind die folgenden Verbindungen:

- Iodonium-Salze (siehe zum Beispiel US 3,729,313 A, US 3,741 ,769 A, US 4,250,053 A, US 4,394,403 A und US 2010/063221 A1) wie Diphenyliodoniumtetrafluoroborat, Di-(4-methylphenyl)-iodoniumtetrafluoroborat, Phenyl-4-methylphenyliodoniumtetrafluoroborat, Di-(4-chlorphenyl)-iodoniumhexafluorophosphat, Dinaphthyliodoniumtetrafluoroborat, Di-(4-trifluormethylphenyl)-iodoniumtetrafluoroborat, Diphenyliodoniumhexafluorophosphat, Di-(4-methylphenyl)-iodoniumhexafluorophosphat, Diphenyliodoniumhexafluoroarsenat, Di-(4-phenoxyphenyl)-iodoniumtetrafluoroborat, Phenyl-2-thienyliodoniumhexafluorophosphat, 3,5-Dimethylpyrazolyl-4-phenyliodoniumhexafluorophosphat, Diphenyliodoniumhexafluoroantimonat, 2,2'-Diphenyliodoniumtetrafluoroborat, Di-(2,4-dichlorphenyl)-iodoniumhexafluorophosphat, Di-(4-bromphenyl)-iodoniumhexafluorophosphat, Di-(4-methoxyphenyl)-iodoniumhexafluorophosphat, Di-(3-carboxyphenyl)-iodoniumhexafluorophosphat, Di-(3-methoxycarbonylphenyl)-iodoniumhexafluorophosphat, Di-(3-methoxysulfonylphenyl)-iodoniumhexafluorophosphat, Di-(4-acetamidophenyl)-iodoniumhexafluorophosphat, Di-(2-benzothienyl)-iodoniumhexafluorophosphat, Diaryliodoniumtristrifluormethylsulfonylmethid wie Diphenyliodoniumhexafluoroantimonat, Diaryliodoniumtetrakis-(pentafluorophenyl)-borat wie Diphenyliodoniumtetrakis-(pentafluorophenyl)-borat, (4-n-Desiloxyphenyl)-phenyliodoniumhexafluoroantimonat, [4-(2-Hydroxy-n-tetradesiloxy)-phenyl]-phenyliodoniumhexafluoroantimonat, [4-(2-Hydroxy-n-tetradesiloxy)-phenyl]-phenyliodoniumtrifluorosulfonat, [4-(2-Hydroxy-n-tetradesiloxy)-phenyl]-phenyliodoniumhexafluorophosphat, [4-(2-Hydroxy-n-tetradesiloxy)-phenyl]-phenyliodoniumtetrakis-(pentafluorophenyl)-borat, Bis-(4-tert-butylphenyl)-iodoniumhexafluoroantimonat, Bis-(4-tert-butylphenyl)-iodoniumhexafluorophosphat, Bis-(4-tert-butylphenyl)-iodoniumtrifluorosulfonat, Bis-(4-tert-butylphenyl)-iodoniumtetrafluoroborat, Bis-(dodecylphenyl)-iodoniumhexafluoroantimonat, Bis-(dodecylphenyl)-iodoniumtetrafluoroborat, Bis-(dodecylphenyl)-iodoniumhexafluorophosphat, Bis-(dodecylphenyl)-iodoniumtrifluoromethylsulfonat, Di-(dodecylphenyl)-iodoniumhexafluoroantimonat, Di-(dodecylphenyl)-iodoniumtriflat, Diphenyliodoniumbisulfat, 4,4'-Dichlorodiphenyliodoniumbisulfat, 4,4'-Dibromodiphenyliodoniumbisulfat, 3,3'-Dinitrodiphenyliodoniumbisulfat, 4,4'-Dimethyldiphenyliodoniumbisulfat, 4,4'-Bissuccinimidodiphenyliodoniumbisulfat, 3-Nitrodiphenyliodoniumbisulfat, 4,4'- Dimethoxydiphenyliodoniumbisulfat, Bis-(dodecylphenyl)-iodoniumtetrakis-(pentafluorophenyl)-borat, (4-Octyloxyphenyl)-phenyliodoniumtetrakis-(3,5-bis-trifluoromethylphenyl)-borat und (Tolylcumyl)-iodoniumtetrakis-(pentafluorophenyl)-borat,
- Ferrocenium-Salze (siehe zum Beispiel EP 0 542 716 B1) wie n5-(2,4-cyclopentadien-1 -yl)-[(1 ,2,3,4,5,6,9)-(1 -methylethyl)-benzol]-eisen.

Beispiele für kommerziell erhältliche, erfindungsgemäß günstig einsetzbare Photoinitiatoren sind Speedcure® 939 (4-Isopropyl-4'-methyldiphenyliodonium-tetrakis(pentafluoro-phenyl)borat) (Firma Sartomer/Lambson), Speedcure® 938 (Bis-(4-t-butylphenyl)-iodoniumhexafluorophosphat) (Firma Sartomer/Lambson), Deuteron® UV 1242 (Bis-(Dodecylphenyl)-iodoniumhexafluoroantimonat) (Firma Deuteron), Deuteron® UV 3100 (Bis-(4-Dodecylphenyl)-iodoniumhexafluorophosphat), (Firma Deuteron), Deuteron® UV 2257 (Bis-(4-methylphenyl)-iodoniumhexafluorophosphat) (Firma Deuteron) und Sylanto®-7MP (Diaryliodoniumhexafluorophosphat) (Firma Synthos). Angegeben sind jeweils die chemisch relevanten Bestandteile, sofern als Lösung erhältlich.

Die Photosäurebildner können unkombiniert oder als Kombination von zwei oder mehreren Photosäurebildnern eingesetzt werden.

Nach einer besonders bevorzugten Ausführungsform enthält der Photosäurebildner eine Verbindung, deren Anionen Tetrakis(pentafluorophenyl)borat sind.

Der Anteil von (D) in dem Klebstoff beträgt bevorzugt mindestens 0,1 Gew.-% bis höchstens 10,0 Gew.-%, stärker bevorzugt 0,2 Gew.-% bis 5 Gew, besonders bevorzugt 0,5 bis 2,0 Gew.-%.

Matrixpolymer (E).

Als optionale Matrixpolymere als Filmbildner für erfindungsgemäße Klebstoffe sind thermoplastische Materialien, Elastomere und thermoplastische Elastomere geeignet. Sie werden insbesondere so ausgewählt, dass sie in Kombination mit den weiteren Formulierungsbestandteilen solche Klebstoffe zugänglich machen, die vorteilhaft im Hinblick auf die Herstellung, Weiterverarbeitung und Handhabung von latenten Reaktivklebefilmen sind. In diesem Zusammenhang seien Verarbeitungsprozesse beim Klebebandhersteller einerseits und Klebebandanwender andererseits im Hinblick auf klebtechnische Eigenschaften und im Hinblick auf weitere Verbesserung der Dimensionsstabilität der Klebefilme in Bezug auf die Darreichung des Klebeprodukts und das Ausquetschverhalten im Heißlaminierprozess, um nur einige besonders wichtige Anforderungen zu nennen, genannt.

In vorteilhafter Vorgehensweise werden thermoplastische Materialien als Matrixpolymere (E) eingesetzt, die vom (Co)polymer (A) und/oder Epoxid-haltigen Verbindungen (B) verschieden sind. Beispiele sind semikristalline Polyolefine und Ethylen-Vinylacetat-Copolymere (EVA). Bevorzugte Polyolefine werden aus Ethylen, Propylen, Butylen und/oder Hexylen hergestellt, wobei jeweils die reinen Monomere polymerisiert werden können oder Mischungen aus

den genannten Monomeren copolymerisiert werden. Durch das Polymerisationsverfahren und durch die Auswahl der Monomere lassen sich die physikalischen und mechanischen Eigenschaften des Polymers steuern, wie zum Beispiel die Erweichungstemperatur und/oder spezielle mechanische Eigenschaften.

Sehr vorteilhaft sind Elastomere als Matrixpolymere (E) einsetzbar. Beispielhaft seien Kautschuk oder Synthesekautschuk als Ausgangsmaterial für den Klebstoff genannt. Hier sind vielfältige Variationsmöglichkeiten gegeben, sei es für Kautschuke aus der Gruppe der Naturkautschuke oder der Synthesekautschuke oder sei es aus einem beliebigen Verschnitt aus Naturkautschuken und/oder Synthesekautschuken, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits-und Viskositätsniveau, und der Synthesekautschuk oder die Synthesekautschuke aus der Gruppe der statistisch copolymerisierten Styrol-Butadien-Kautschuke (SBR), der Acrylnitril-Butadien-Kautschuke (Nitrilkautschuke), der Butadien-Kautschuke (BR), der synthetischen Polyisoprene (IR), der Butyl-Kautschuke (IIR), der halogenierten Butyl-Kautschuke (XIIR), der Acrylat-Kautschuke (ACM), EPDM, der Polybutylene oder der Polyisobutylene gewählt werden können.

Vorteilhaft einsetzbare Nitrilkautschuke sind insbesondere heißpolymerisierte und/oder solche mit einem Acrylnitril-Gehalt zwischen 15 % und 50 %, bevorzugt zwischen 30 % und 45 % sowie einer Mooney-Viskosität (ML 1+4,100 °C) zwischen 30 und 110, bevorzugt zwischen 60 und 90. Die eingesetzten Elastomere können auch vollhydriert oder teilhydriert sein. Die Verwendung (teil)hydrierter Nitrilkautschuke etwa bietet den Vorteil, Vergelungen aufgrund von Radikalen zu vermeiden.

Nicht aminische Stabilisatoren können mit den Elastomeren eingesetzt werden, etwa in Verbidnung mit den eingesetzten Nitrilkautschuken.

Sehr vorteilhaft sind auch Poly(meth)acrylate, die aus den vorstehend beschriebenen (Co)Monomeren (b), (c) und/oder (d) aufgebaut sind. Die Glasübergangstemperatur dieser Poly(meth)acrylate kann insbesondere unterhalb 25 °C liegen oder sogar unterhalb 0 °C und insbesondere unterhalb -25 °C. Auf diese Weise sind haftklebrige Reaktivklebesysteme zugänglich.

Außerdem vorteilhaft sind thermoplastische Elastomere und hier insbesondere Block-, Stern- und/oder Pfropfcopolymere mit einer Molmasse Mw (Gewichtsmittel) von 300.000 g/mol oder kleiner, bevorzugt 200.000 g/mol oder kleiner. Kleinere Molgewichte sind dabei aufgrund ihrer besseren Verarbeitbarkeit bevorzugt. Die Molmasse sollte nicht unter 50 000 g/mol liegen.

Spezifische Beispiele sind Styrol-Butadien-Blockcopolymere (SBS), Styrol-Isopren-Blockcopolymere (SIS), Styrol-(Isopren/Butadien)-Blockcopolymere (SIBS) und (teil)hydrierte Varianten wie Styrol-(Ethylen/Butylen)-Blockcopolymere (SEBS), Styrol-(Ethylen/Propylen)-Blockcopolymere (SEPS, SEEPS), Styrol-(Butylen/Butyl)-Blockcopolymere (SBBS), Styrol-iso-Butylen-Blockcopolymere (SiBS) und Polymethylmethacrylat-Polyacrylat-Blockcopolymere. Diese Blockcopolymere können als lineare oder mehrarmige Struktur eingesetzt werden, als Diblockcopolymer, Triblockcopolymer oder Multiblockcopolymer sowie als Gemische verschiedener Arten.

Weitere vorteilhafte Beispiele für thermoplastische Elastomere sind thermoplastische Polyurethane (TPU). Polyurethane sind chemisch und/oder physikalisch vernetzte Polykondensate, die typischerweise aus Polyolen und Isocyanaten aufgebaut werden und Weich- und Hartsegmente enthalten. Die Weichsegmente bestehen beispielsweise aus Polyestern, Polyethern, Polycarbonaten, im Sinne dieser Erfindung jeweils bevorzugt aliphatischer Natur, und Polyisocyanathartsegmenten. Je nach Art und Einsatzverhältnis der einzelnen Komponenten sind Materialien erhältlich, die im Sinne dieser Erfindung vorteilhaft eingesetzt werden können. Rohstoffe, die dem Formulierer hierzu zur Verfügung stehen, sind zum Beispiel in EP 894 841 B1 und EP 1 308 492 B1 genannt. Besonders bevorzugt eingesetzt werden semikristalline (teilkristalline) thermoplastische Polyurethane.

Weiterhin sind Polyolefin-basierte thermoplastische Elastomere, Polyetheresterelastomere für Matrixpolymere (E) einsetzbar. Geeignete gesättigte thermoplastische Polymere können ebenfalls vorteilhaft gewählt werden aus der Gruppe der Polyolefine (zum Beispiel Ethylen-Vinylacetat-Copolymere (EVA)), der Polyether, der Copolyether, der Polyester, der Copolyester, der Polyamide, der Copolyamide, der Polyacrylsäureester, der Acrylsäureester-Copolymere, der Polymethacrylsäureester, der Methacrylsäureester-Copolymer sowie chemisch oder physikalisch vernetzte Stoffe der zuvor genannten Verbindungen. Darüber hinaus können auch Blends aus verschiedenen thermoplastischen Polymeren insbesondere aus den vorstehenden Verbindungsklassen eingesetzt werden. Besonders bevorzugt eingesetzt werden semikristalline (teilkristalline) thermoplastische Polymere.

Bevorzugte Beispiele sind - insbesondere semikristalline - Polyolefine. Bevorzugte Polyolefine werden aus Ethylen, Propylen, Butylen und/oder Hexylen hergestellt, wobei jeweils die reinen Monomere polymerisiert werden können oder Mischungen aus den genannten Monomeren copolymerisiert werden. Durch das Polymerisationsverfahren und durch die Auswahl der Monomere lassen sich die physikalischen und mechanischen Eigenschaften des Polymers steuern, wie zum Beispiel die Erweichungstemperatur und/oder spezielle mechanische Eigenschaften

Bevorzugt als thermoplastische Polymere eingesetzt werden können thermoplastische Elastomere, und zwar allein oder auch in Kombination mit einem oder mehreren thermoplastischen Polymeren aus den zuvor vorgenannten Verbindungsklassen. Besonders bevorzugt eingesetzt werden gesättigte semikristalline thermoplastische Elastomere.

Besonders bevorzugt sind thermoplastische Polymere mit Erweichungstemperaturen kleiner als 50 °C. In diesem Zusammenhang steht der Begriff Erweichungspunkt für die Temperatur, ab der das thermoplastische Granulat mit sich selbst verklebt. Wenn es sich dabei um semikristalline thermoplastische Polymere handelt, dann weist es vorteilhaft neben seiner - insbesondere wie vorstehend charakterisierten - Erweichungstemperatur (die mit dem Schmelzen der Kristallite zusammenhängt) eine Glasübergangstemperatur von höchstens 0 °C.

In einer bevorzugten, erfindungsgemäßen Ausführungsform wird ein thermoplastisches Polyurethan ohne C-C-Mehrfachbindungen eingesetzt. Vorzugsweise besitzt das thermoplastische Polyurethan eine Erweichungstemperatur von kleiner als 50 °C.

Der Anteil des Matrixpolymers beziehungsweise der Matrixpolymere (E) in dem Klebstoff beträgt, wenn vorhanden, bevorzugt mindestens 2,0 Gew.-% bis höchstens 94,5 Gew.-%, stärker bevorzugt 25,0 Gew.-% bis 92,5 Gew.-%, weiterhin bevorzugt 50,0 Gew-% bis 91,5 Gew.-%.

Additive (F)

Der Klebestoff der vorliegenden Erfindung kann ferner mindestens ein Additiv enthalten. Besonders geeignete Additive sind im Folgenden beschrieben.

Den erfindungsgemäßen Klebstoffen können optional weitere Bestandteile zugefügt werden, die die Eigenschaften der Klebstoffe, insbesondere als Haftklebstoff, Klebstoff, Siegel- oder Dichtmasse, wunschgemäß einstellen. In diesem Zusammenhang seien Klebharze (F1) bevorzugt bis zu 60 Gew.-%, insbesondere bevorzugt bis zu 25 Gew.-% bezogen auf die, niederviskose Reaktivharze (F2) bevorzugt bis zu 15 Gew.-% bezogen auf den Klebstoff und weitere Additive (F3) bevorzugt bis zu 50 Gew.-%, besonders bevorzugt bis 25 Gew.-%, ganz besonders bevorzugt bis zu 10 Gew.-% bezogen auf den Klebestoff genannt.

(F1) Klebharze

Der erfindungsgemäße Klebstoff enthält optional eine oder mehrere Sorten eines Klebharzes, vorteilhaft solche, die mit dem (Co)Polymer (A) und/oder der Epoxid-haltigen Verbindung (B) und/oder dem Matrixpolymer (E) verträglich sind. In einer vorteilhaften Variante sind die Produkte des erfindungsgemäßen Verfahrens klebharzfrei.

Sofern vorhanden, ist es vorteilhaft, wenn dieses Klebharz eine Klebharzerweichungstemperatur (ASTM E28) von größer 25 °C, insbesondere von größer 80 °C aufweist.

Als Klebharze (F1) können in dem Klebstoff zum Beispiel partiell oder vollständig hydrierte oder disproportionierte Harze auf Basis von Kolophonium und Kolophoniumderivaten, Inden- Coumaron-Harze, Terpen-Phenolharze, Phenolharze, hydrierte Polymerisate des Dicyclopentadiens, partiell, selektiv oder vollständig hydrierte Kohlenwasserstoffharze auf Basis von C5-, C5/C9- oder C9-Monomerströmen, Polyterpenharze auf Basis von a-Pinen und/oder $\beta$-Pinen und/oder $\delta$-Limonen, hydrierte Polymerisate von bevorzugt reinen C8-und C9-Aromaten eingesetzt werden. Vorgenannte Klebharze können sowohl allein als auch im Gemisch eingesetzt werden.

Um eine hohe Alterungs- und UV-Stabilität zu gewährleisten, sind hydrierte Harze mit einem Hydrierungsgrad von mindestens 90 %, vorzugsweise von mindestens 95 % bevorzugt.

Der Fachmann wählt geeignete Klebharze gemäß einschlägig bekannter Vorgehensweisen aus dem Bereich der Haftklebstoffe zu Harz/Polymer-Verträglichkeit aus. Insbesondere macht er sich das Konzept der Auswahl über Trübungspunkte DACP-Wert (diacetone alcohol cloud point) und MMAP- Wert (mixed methylcylohexane aniline point) zu nutze. Der DACP-Wert und der MMAP-Wert geben jeweils die Löslichkeit in einem bestimmten Lösemittelgemisch an. Zur Definition und Bestimmung des DACP- und MMAP-Werts sei auf C. Donker, PSTC Annual Technical Proceedings, S. 149-164, Mai 2001 verwiesen.

Als hervorragend einsetzbares Kohlenwasserstoffharz sei beispielhaft hydriertes Kohlenwasserstoffharz, insbesondere c-5-Kohlenwasserstoffharz, genannt, so etwa das Produkt Regalite® R1090 der Firma Eastman. Dabei handelt es sich um ein vollständig hydriertes, wasser-weißes, inertes, thermoplastisches Harz mit niedrigem Molekulargewicht, das aus petrochemischen Rohstoffen gewonnen wird.

(F2) niedermolekulare Reaktivharze

Optional aber vorteilhaft können niedermolekulare Reaktivharze eingesetzt werden, die von der Epoxid-haltigen Verbindung (B) verschieden sind. Sie weisen bevorzugt eine Erweichungstemperatur (insbesondere Glasübergangstemperatur) unterhalb Raumtemperatur auf. Ihre gewichtsmittlere Molmasse beträgt bevorzugt weniger als 5000 g/mol, stärker bevorzugt weniger als 1000 g/mol. Sie kommen bevorzugt zu einem Anteil in dem Klebestoff von höchstens 25 Gew.-%, sehr bevorzugt von höchstens 10 Gew.-% zum Einsatz. Bei diesen niederviskosen Reaktivharzen handelt es sich insbesondere um cyclische Ether, also Verbindungen, die zumindest eine Oxiran-Gruppe tragen, oder Oxetane. Sie können aromatischer oder insbesondere aliphatischer oder cycloaliphatischer Natur sein. Einsetzbare Reaktivharze

können monofunktionell, difunktionell, trifunktionell, tetrafunktionell oder höher funktionell bis zu polyfunktionell gestaltet sein, wobei sich die Funktionalität auf die cyclische Ethergruppe bezieht.

Beispiele, ohne die erfindungsgemäße Lehre unnötig beschränken zu wollen, sind 3,4-Epoxycyclohexylmethyl-3',4'-epoxycyclohexancarboxylat (EEC) und Derivate, Dicyclopendadiendioxid und Derivate, 3-Ethyl-3-oxetanmethanol und Derivate, Bis-[(3,4-epoxycyclohexyl)methyl]-adipat und Derivate, Vinylcyclohexyldioxid und Derivate, 1,4-Cyclohexandimethanol-bis-(3,4-epoxycyclohexancarboxylat) und Derivate, Bis-[1-ethyl(3-oxetanyl)methyl)ether und Derivate, 2-(7-Oxabicyclospiro(1,3-dioxan-5,3'-(7-oxabicyclo[4.1.0]-heptan)), 1,4-Bis((2,3- epoxypropoxy)methyl)cyclohexan. Auch hier werden (cyclo)aliphatische Epoxide bevorzugt.

Reaktivharze können in ihrer monomeren oder auch dimeren, trimeren, usw. bis hin zu ihrer oligomeren Form eingesetzt werden, sofern das gewichtsmittlere Molekulargewicht 5 000 g/mol nicht erreicht oder überschreitet.

Da diese Reaktivharze typischerweise niedrigviskos sind, bergen sie die Gefahr, dass ein zu hoher Anteil von ihnen in einem Klebestoff zu einer zu hohen Ausquetschneigung führt. Es wird daher ein möglichst niedriger Anteil in dem Klebstoff bevorzugt höchstens 25 Gew.-%, sehr bevorzugt höchstens 10 Gew.-% eingesetzt. Bis zu 50 Gew.-% können nur dann eingesetzt werden, wenn der Anteil an (Co)Polymer (A) bei mindestens 50 Gew.-% liegt und die Summe des Anteils an (Co)Monomeren (a) und ggf. (b) im (Co)Polymer (A) bei mindestens 50 Gew.-% liegt.

Gemische von Reaktivharzen untereinander aber auch mit anderen co-reaktiven Verbindungen wie Alkoholen (monofunktionell oder mehrfach funktionell) oder Vinylethern (monofunktionell oder mehrfach funktionell) sind ebenfalls möglich.

Als co-reaktive Verbindungen sind insbesondere Alkohole wie Monoole, Diole, Triole oder höherfunktionelle Polyole geeignet.

Als Haftvermittler können ebenfalls vorteilhaft Silanhaftvermittler eingesetzt werden. Als Silanhaftvermittler werden insbesondere Verbindungen der allgemeine Form $RR'_aR''_bSiX_{(3-a-b)}$ genutzt, wobei R, R' und R" unabhängig voneinander gewählt sind und jeweils ein an das Si-Atom gebundenes Wasserstoffatom oder einen an das Si-Atom gebundenen organischen funktionalisierten Rest bezeichnen, X eine hydrolysierbare Gruppe bezeichnet, a und b jeweils 0 oder 1 sind, und wobei R, R' und R" oder zwei Vertreter dieser Gruppe auch identisch sein können.
Genutzt werden können als Haftvermittler auch Verbindungen, bei denen bei Anwesenheit mehrerer hydrolysierbarer Gruppen X nicht identisch sind, sondern sich voneinander unterscheiden [entsprechend der Formel $RR'_aR''_bSiXX'_cX''_d$, mit X, X', X" als unabhängig voneinander gewählten hydrolysierbaren Gruppen (von denen wiederum aber auch zwei identisch sein können), c und d jeweils 0 oder 1 sind, mit der Maßgabe, dass a + b + c + d = 2 ist].

Als hydrolysierbare Gruppen werden insbesondere Alkoxygruppen genutzt, so dass insbesondere Alkoxysilane als Haftvermittler eingesetzt werden. Bevorzugt sind die Alkoxygruppen eines Silanmoleküls gleich, sie können prizipiell aber auch unterschiedlich gewählt werden.

Als Alkoxygruppen werden beispielsweise Methoxygruppen und/oder Ethoxygruppen gewählt. Methoxygruppen sind reaktiver als Ethoxygruppen. Methoxygruppen können daher eine bessere Haftvermittlungswirkung durch schnellere Reaktion mit den Substratoberflächen aufweisen und daher gegebenenfalls die eingesetzte Menge reduziert werden. Ethoxygruppen haben hingegen den Vorteil, dass sie aufgrund der geringeren Reaktivität einen geringeren (gegebenenfalls negativen) Einfluss auf die Verarbeitungszeit und/oder die Shelf-Life des Klebefilms besitzen, insbesondere auch in Hinblick auf die gewünschte Feucht-Wärme-Stabilität.

Bevorzugt werden als Haftvermittler Trialkoxisilane $R\text{-}SiX_3$ eingesetzt. Beispiele für erfindungsgemäß geeignete Trialkoxysilane sind
Trimethoxysilane - wie N-(2-Aminoethyl)-3-aminopropyl-trimethoxysilan, N-Cyclohexyl-3-aminopropyl-trimethoxysilan, 3-Aminopropyl-trimethoxysilan, 3-Ureidopropyltrimethoxysilan, Vinyltrimethoxysilan, 3-Glycidoxypropyl-trimethoxysilan, 3-Methacryloxypropyl-trimethoxysilan, Methacryloxymethyl-trimethoxysilan, N-Methyl-[3-(Trimethoxysilyl)propyl]carbamat, N-Trimethoxysilylmethyl-O-methylcarbamat, Tris-[3-(trimethoxysilyl)propyl]-isocyanurat, 3-Glycidoxypropyl-trimethoxysilan, Methyltrimethoxysilan, Isooctyltrimethoxysilan, Hexadecyltrimethoxysilan, 3-Mercaptopropyl-trimethoxysilan, 3-Aminopropyl-trimethoxysilan, N-(2-Aminoethyl)-3-Aminopropyl-trimethoxysilan, N-Phenyl-3-aminopropyl-trimethoxysilan, N-Ethyl-3-aminoisobutyl-trimethoxysilan, Bis-[3-(trimethoxysilyl)propyl]amin, 3-Isocyanatopropyltrimethoxysilan, 2-(3,4-Epoxycyclohexyl)-ethyl-trimethoxysilan; 3-Methacryloxypropyltrimethoxysilan, 3-Methacrylamidopropyl-trimethoxysilan, p-Styryltrimethoxysila, 3-Acryloxypropyl-trimethoxysilan, N-(Vinylbenzyl)-2-aminoethyl-3-aminopropyltrimethoxysilan hydrochlrid -, Triethoxysilane - wie N-Cyclohexylaminopropyl-triethoxysilan, 3-Aminopropyl-triethoxysilan, 3-Ureidopropyl-triethoxysilan, 3-(2-Aminomethyl-amino)propyl-triethoxysilan, Vinyltriethoxysilan, 3-Glycidoxypropyltriethoxysilan, Methyltriethoxysilan, Octyltriethoxysilan, Isooctyltriethoxysilan, Phenyltriethoxysilan, 1,2-Bis(triethoxysilan)ethan, 3-Octanonylthio-1-propyl-triethoxysilan; 3-Aminopropyl-triethoxysilan, Bis-[3-(triethoxysilyl)propyl]amin, 3-Isocyanatopropyltriethoxysilan, 2-(3,4-Epoxycyclohexyl)-ethyl-triethoxysilan, 3-Methacryloxypropyltriethoxysilan, 3-Methacrylamidopropyl-triethoxysilan, 3-Triethoxysilyl-N-(1,3-dimethylbutadien)propylamid -, Triacetoxysilane - wie Vinyltriacetoxysilan, 3-Methacryloxypropyl-triacetoxysilan, Triacetoxyethylsilan -, gemischte Trialkoxysilane - wie 3-Methacrylamidopropyl-methoxy-diethoxysilan, 3-Methacryl-amidopropyl-dimethoxyethoxysilan -.

Beispiele für erfindungsgemäß geeignete Dialkoxysilane sind

Dimethoxysilane - wie N-(2-Aminoethyl)-3-aminopropyl-methyldimethoxysilan, Vinyldimethoxy-methylsilan, (Methacryloxymethyl)-methyldimethoxysilan, Methacryloxymethyl-methyl-dimethoxysilan, 3-Methacryloxypropyl-methyldimethoxysilan, Dimethyldimethoxysilan, (Cyclohexyl)methyldimethoxysilan, Dicyclopentyl-dimethoxysilan, 3-Glycidoxypropylmethyldimethoxysilan, 3-Mercaptopropyl-methyldimethoxysilan -, Diethoxysilane - wie Dimethyldiethoxysilan, Gamma-Aminopropyl-methyl-diethoxysilan; 3-Glycidoxypropyl-methyldiethoxysilan, 3-Methacryloxypropyl-methyldiethoxysilan -.

Ein Beispiel für ein Monooxysilan ist Trimethyloxysilan.

Die Menge zugesetzten Haftvermittler kann grundsätzlich in einer großen Bandbreite gewählt werden, je nach den gewünschten Eigenschaften des Produktes und unter Berücksichtigung der gewählten Rohstoffe des Klebefilms. Es hat sich als erfindungsgemäß jedoch sehr vorteilhaft herausgestellt, wenn die Menge des eingesetzten Haftvermittlers, bezogen auf den eingesetzten Klebstoff, im Bereich von 0,5 bis 20 Gew.-%, bevorzugt im Bereich von 1 bis 10 Gew.-%, besonders bevorzugt von 1,5 bis 5 Gew.-%, ganz besonders bevorzugt im Bereich von 2,5 bis 3,5 Gew.-% gewählt werden. Sehr hohe Mengen an eingesetzten Haftvermittlern können eine stark weichmachende Wirkung haben, so dass es - insbesondere in Hinblick auf hinreichend stabile Filme - vorteilhaft sein kann, die Menge an Haftvermittler möglichst gering zu wählen, so dass zwar einerseits der gewünschte positive Einfluss auf die Feucht-Wärme-Beständigkeit hinreichend groß ist, andererseits die Eigenschaften des Klebefilms in Hinblick auf dessen Formbeständigkeit und Stabilität nicht zu negativ beeinflusst werden.

In einer sehr vorteilhaften Vorgehensweise wird der Klebmasse als Additiv (F) ein solches zugesetzt, dass wasseraufnehmende Wirkung hat. Als hervorragend geeignetes Beispiel hat sich Magnesium-Aluminium-Hydroxid-Carbonat sowie dessen Hydrat (Talcit beziehungsweise Hydrotalcit; CAS-Nr. 11097-59-9) herausgestellt, vorteilhaft in partikulärer Form. Mit einem Brechungsindex von 1,52 ist das Additiv besonders hervorragend geeignet für Klebemassen für Filme mit sogenannter "Barrierewirkung". Barriere-Filme haben keine oder eine eingeschränkte Durchlässigkeit für Feuchtigkeit (Wasserdampf) oder Sauerstoff und können insbesondere vorteilhaft dort eingesetzt werden, wo die Substrate vor solchen Stoffen geschützt werden sollen, wie etwa im Elektronik-Bereich. Auf den einschlägigen Stand der Technik wird verwiesen. Vorgenanntes Additiv ist beispielsweise erhältlich von der Firma "Kyowa Chemical Industrie Co, Ltd unter der Bezeichnung DHT-4A-2® als Zusammensetzung aus $\geq$ 95 Gew.-% Magnesium-Aluminium-Hydroxid-Carbonat und $\leq$ 5 Gew-% Stearinsäure.

Als weitere optionale Bestandteile (F) können als Additive der Klebstoffe übliche Additive (F4) wie Alterungsschutzmittel, wie Antiozonantien, Antioxidantien, Lichtschutzmittel, zugesetzt sein.

Als erfindungsgemäß vorteilhafte Vertreter optionaler Additive (F4) des Klebstoffs seien, je nach gewünschten Eigenschaften der Klebstoffe, folgende Beispiele genannt, ohne sich durch diese Nennung jedoch einschränken zu wollen:

- primäre Antioxidantien wie zum Beispiel sterisch gehinderte Phenole
- sekundäre Antioxidantien wie zum Beispiel Phosphite oder Thioether
- Prozessstabilisatoren wie zum Beispiel C-Radikalfänger
- Lichtschutzmittel wie zum Beispiel UV-Absorber oder sterisch gehinderte Amine
- Verarbeitungshilfsmittel wie rheologisch wirksame Additive (z. B. Verdicker)
- Netzadditive
- Blähmittel wie chemische Schäumungsmittel und/oder expandierte oder expandierbare Mikroballons und/oder Hohlkugeln wie Glashohlkugeln
- Haftvermittler
- Verträglichkeitsvermittler / Kompatibilisatoren
- Farbmittel / Pigmente
- Füllstoffe / funktionalisierte Füllstoffe

Der Klebstoff enthält vorteilhafterweise ferner einen oder mehrerer Weichmacher. Beispiele hierfür sind Weichmacher auf Basis von aliphatischen oder cycloaliphatischen Alkylestern eingesetzt. Bei den Estern handelt es sich bevorzugt um Ester aliphatischer oder cycloaliphatischer Carbonsäuren, insbesondere Dicarbonsäure. Einsetzbar sind aber auch Phosphorsäureester (Phosphate). Unter den aliphatischen Carbonsäureestern seien Alkyl- oder Cycloalkyladipate wie insbesondere Di-(2-Ethylhexyl)-adipat, Diisononyladipat, Diisodecyladipat, Ditridecyladipat und Dioctyladipat als Beispiele genannt. Weitere Beispiele sind Alkyl- und Cycloalkylsebacate wie insbesondere Di-(2-Ethylhexyl)-sebacat und Alkyl- und Cycloalkylazelate wie insbesondere Di-(2-Ethylhexyl)-azelat. Besonders bevorzugt werden aliphatische oder cycloaliphatische Cyclohexyldicarbonsäurediester, wie sie zum Beispiel in der WO 2011/009672 A1 beschrieben sind, eingesetzt, insbesondere 1,2-Diisobutylcyclohexandicarbonsäureester, 1,2-Di-(2-Ethylhexyl)-cyclohexandicarbonsäureester oder 1,2-Diisononylcyclohexandicarbonsäureester (auch als "DINCH" bezeichnet). Ausgewählte Vertreter dieser Gruppe sind beispielsweise von BASF SE erhältlich. Wie auch bei der Auswahl von Klebharzen, wird bei der Auswahl der optional einsetzbaren Weichmacher auf Verträglichkeit mit weiteren Bestandteilen des Klebstoffs,

insbesondere mit (Co)Polymeren (A) und/oder Epoxid-haltigen Verbindungen (B) und/oder falls vorhanden Matrixpolymeren (E) geachtet.

Die Additive sind nicht zwingend, ein Vorteil des erfindungsgemäßen Klebstoffs ist, dass diese ihre vorteilhaften Eigenschaften aufweist, auch ohne dass zusätzliche Additive einzeln oder in beliebiger Kombination zugesetzt sind. Dennoch kann es im Einzelnen vorteilhaft und wünschenswert sein, bestimmte weitere Eigenschaften des Klebstoffs, insbesondere der gewöhnlichen Klebstoffe, Haftklebstoffe, Siegel- oder Dichtstoffe, durch Additivzugabe zu justieren.

So lassen sich beispielsweise die Transparenz der Masse und deren Farbe beeinflussen. Manche Formulierungen sind optisch klar, andere opak, wieder andere farbig, schwarz, weiß oder grau eingestellt.

Auch unter den optionalen Additiven werden solche bevorzugt ausgewählt, die vor der Initiierung der Härtungsreaktion im Wesentlichen keine oder insbesondere gar keine Reaktion mit Glycidyl- oder Epoxid-Funktionalitäten eingehen oder die Reaktionen der Glycidyl- oder Epoxid-Funktionalitäten weder initiieren noch katalysieren, oder solche, bei denen die Reaktion mit Glycidyl- oder Epoxid-Funktionalitäten anderweitig unterbunden ist.

In Kombination mit optional einsetzbaren Comonomeren (d) auf Silan-Basis, sofern solche zum Einsatz kommen, oder auch alternativ können als Haftvermittler weitere Silane verwendet werden, die nicht durch Polymerisation in die erfindungsgemäßen funktionalisierten (Co)Polymere (A) eingebaut sind. Im Sinne dieser Erfindung einsetzbare Beispiele für Silane sind, ohne sich einschränken zu wollen, Methyltrimethoxysilan, Methyltriethoxysilan, Dimethyldimethoxysilan, Dimethyldiethoxysilan, Trimethylethoxysilan, Ethyltrimethoxysilan, Propyltrimethoxysilan, Propyltriethoxysilan, iso-Butyltrimethoxysilan, iso-Butyltriethoxysilan, Octyltrimethoxysilan, Octyltriethoxysilan, iso-Octyltrimethoxysilan, iso-Octyltriethoxysilan, Hexadecyltrimethoxysilan, Hexadecyltriethoxysilan, Octadecylmethyldimethoxysilan, Phenyltrimethoxysilan, Phenyltriethoxysilan, Cyclohexylmethyldimethoxysilan, Dicyclopentyldimethoxysilan.

Ein Beispiel für silylfunktionalisierte Oligomere oder Polymere, die erfindungsgemäß zum Einsatz kommen können, ist Polyethylenglykol, das mit einer Trimethoxysilan-Gruppe verknüpft ist.

Weitere Beispiele für einsetzbare Silane, die zumindest eine Funktionalisierung tragen, sind, Vinyltrimethoxysilan, Vinyltriethoxysilan, Vinyl-tri(2-methoxyethoxy)-silan, Vinyltriisopropoxysilan, Vinyldimethoxymethylsilan, Vinyltriacetoxysilan, 3-Glycidyloxypropyltrimethoxysilan, 3-Glycidyloxypropyltriethoxysilan, 2-(3,4-Epoxycyclohexyl)-ethyltriethoxysilan, 3-Glycidyloxypropyldiethoxymethylsilan, 3-Methacryloyloxypropyltrimethoxysilan, 3-Methacryloyloxypropyltriethoxysilan, 3-Methacryloyloxypropyltriisopropoxysilan, 3-Methacryloyloxypropyldimethoxymethylsilan, 3-Methacryloyloxypropyldiethoxymethylsilan, 3-Chloropropyltrimethoxysilan, 3-Chloropropyltriethoxysilan, 3-Ureidopropyltrimethoxysilan, 3-Ureidopropyltriethoxysilan, 2-Hydroxy-4-(3-triethoxysilylpropoxy)-benzophenon, 4-(3'-Chlorodimethylsilylpropoxy)-benzophenon.

Als Beispiele optionaler Vernetzer seien latentreaktive Diamine oder multifunktionelle Amine, Dicarbonsäuren oder multifunktionelle Carbonsäuren, difunktionelle Säureanhydride oder multifunktionelle Säureanhydride, primäre Dithiole oder multifunktionelle primäre Thiole genannt. Besonders vorteilhaft im Hinblick auf Latenz sind solche Reaktionspartner, die bei Raumtemperatur fest und nicht in dem erfindungsgemäßen Polymer oder einer Mischung, die dieses Polymer enthält, im nicht erweichten Zustand löslich sind aber im erweichten Zustand löslich oder beide Schmelzen miteinander mischbar sind.

Denkbar sind auch Initiatoren / Härter, die gekapselt und/oder blockiert vorliegen und unter Wärmeeinfluss in der Filmmatrix verteilt werden und/oder deblockieren und dann zur Reaktion führen können.

Kommen Füllstoffpartikel zur Anwendung so können sie in ihrer Struktur bevorzugt kugelförmig, stäbchenförmig oder plättchenförmig vorliegen. Separierte Partikel, oftmals auch Primärpartikel genannt, sind dabei ebenso erfindungsgemäß wie aus mehreren Primärpartikeln gebildete Aggregate. Solche Systeme zeigen oft eine fraktale Überstruktur. Werden die Partikel aus Kristalliten gebildet, dann hängt die Primärpartikelform von der Art des Kristallgitters ab. Plättchenförmige Systeme können auch in Form von Schichtstapeln vorliegen. Kommen Füllstoffe zur Anwendung, dann typischerweise zu bis zu 50 Gew.-%.

In einer vorteilhaften Ausführungsform dieser Erfindung liegt eine Füllstoffsorte in dem Klebstoff im Wesentlichen in Form von singulären kugelförmigen Partikeln vor, d.h. bevorzugt in einem Anteil von mehr als 95%, stärker bevorzugt mehr als 98%, am stärksten bevorzugt mehr als 99%. Die Partikeldurchmesser weisen dann Werte von kleiner als 500 nm, bevorzugt von kleiner als 100 nm, sehr bevorzugt von kleiner 25 nm auf. In einer weiteren vorteilhaften Auslegung dieser Erfindung liegt die zumindest eine funktionalisierte Füllstoffsorte in dem Klebstoff im Wesentlichen in Form von singulären plättchenförmigen Partikeln vor. Die Schichtdicke solcher Plättchen weist dann Werte von bevorzugt kleiner als 10 nm und einen größten Durchmesser von bevorzugt kleiner als 1000 nm auf. In einer weiteren vorteilhaften Auslegung dieser Erfindung liegt die zumindest eine Füllstoffsorte in dem Klebstoff im Wesentlichen in Form von singulären stäbchenförmigen Partikeln vor. In diesem Fall weisen diese Stäbchen einen Durchmesser von kleiner als 100 nm und eine Länge von kleiner als 15 $\mu$m auf. Die Stäbchen können auch gekrümmt vorliegen und/oder flexibel sein. Weiterhin ist es im Sinne dieser Erfindung vorteilhaft möglich, dass die zumindest eine Füllstoffsorte in dem Klebstoff in Form von Primärpartikelaggregaten vorliegt. Diese Aggregate weisen einen Gyrationsradius (zu verstehen analog dem von Polymeren bekannten Terminus "Gyrationsradius") von kleiner als 1000 nm, bevorzugt von kleiner als 250 nm auf. Besonders bevorzugt werden solche Füllstoffpartikel im Sinne dieser Erfindung eingesetzt, deren räumliche Ausdehnung in zumindest einer Richtung kleiner als 250 nm ist, bevorzugt kleiner als 100 nm, sehr bevorzugt kleiner als 50 nm. Es ist außerdem im Sinne dieser Erfindung möglich, Kombinationen aus den zuvor genannten Füllstoffarten einzusetzen.

Typische und weitere erfindungsgemäß vorteilhafte Verbindungsklassen für Füllstoffe sind Halbmetalloxide anorganischer Natur, Minerale auf Silikatbasis, insbesondere Tonminerale und Tone. Zu den erfindungsgemäß einsetzbaren amorphen oder kristallinen Metalloxiden zählt insbesondere Siliziumdioxid. Dem Fachmann sind weitere Systeme geläufig, die ebenso erfindungsgemäß eingesetzt werden können. Carbonate, Sulfate, Hydroxide, Phosphate und Hydrogenphosphate sind denkbar. Zu den erfindungsgemäß einsetzbaren Tonmineralen und Tonen zählen insbesondere silikatische Systeme wie Serpentine, Kaoline, Talkum, Pyrophyllit, Smectite wie insbesondere Montmorillonit, Vermiculite, Illite, Glimmer, Sprödglimmer, Chlorite, Sepiolith und Palygorskit. Weiterhin können synthetische Tonminerale wie Hectorite sowie deren verwandte Systeme wie z. B. Laponite® der Fa. Laporte und Fluorhectorite sowie deren verwandte Systeme wie z. B. Somasif® der Fa. Co-Op erfindungsgemäß eingesetzt werden.

Füllstoffpartikel können an ihrer Oberfläche funktionalisiert sein, hydrophob oder hydrophil eingestellt sein. Besonders vorteilhaft ist eine Funktionalisierung mittels Verbindungen mit Glycidyl- und/oder aliphatischen Epoxid-Gruppen, die an der Härtungsreaktion teilnehmen können.

Die Füllstoffe sind nicht zwingend, der Klebstoff funktioniert auch, ohne dass diese einzeln oder in beliebiger Kombination zugesetzt sind. Auch unter den optionalen Füllstoffen werden solche ausgewählt, die vor der Initiierung des Härtungsprozesses im Wesentlichen keine oder insbesondere gar keine Reaktion mit Glycidyl- oder Epoxid-Funktionalitäten eingehen oder Reaktionen der Glycidyl- oder Epoxid-Funktionalitäten initiieren oder katalysieren oder die Reaktion mit Glycidyl- oder Epoxid- Funktionalitäten anderweitig unterbunden ist.

Die Zusammensetzung des Klebstoffs, also der Komponenten (A), (B), (C), (D), (E) und (F) wird einer besonderen Ausführung der Erfindung derart gewählt, dass die resultierende Glasübergangstemperatur des Klebstoffs in einem Bereich zwischen -50 °C und 10° C, mehr bevorzugt zwischen -20 °C und 0 °C liegt. Die Einstellung der Glasübergangstemperatur der Gesamtmasse kann der Fachmann ohne weiteres mit seinem üblichen Fachwissen vornehmen; insbesondere mittels der sogenannten Fox-Gleichung (U. W. Gedde, Polymer Physics, 1999, Kluwer, Dortrecht, S. 70). Die Fox-Gleichung erlaubt eine rechnerische Abschätzung der Glasübergangstemperatur einer homogenen Mischung und nutzt hierfür die Glasübergangstemperaturen der Ausgangskomponenten der Mischung, gewichtet über den jeweiligen Mischungsanteil dieser Komponenten. Die dort eingesetzten Grunddaten beziehen sich auf Glasübergangstemperaturen für hypothetische Homopolymere des entsprechenden Comonomers. Hierzu kann man sich Tabellenwerten bedienen, die für Homopolymere mit sehr hohen Molmassen, nämlich solchen, bei denen sich die Glasübergangstemperatur nicht mehr mit dem Molekulargewicht ändert, gelistet sind.

Die erfindungsgemäßen Klebefilme haben sich als hervorragend vorlaminierbar und im Heißverpressschritt zur Ausbildung der schließlichen Klebefestigkeit aktivierbar herausgestellt, das heißt sie beinhalten die Fähigkeit zur chemischen Reaktion, insbesondere zu einer schnellen Vernetzungs- und/oder Härtungsreaktion, nach entsprechender Aktivierung. Die Aktivierung erfolgt insbesondere thermisch, das heißt durch Wärmezufuhr. Grundsätzlich sind andere Aktivierungsmethoden - wie beispielsweise induktiv, durch Mikrowellen, durch Bestrahlung mit UV- Strahlung, Laserbehandlung, Plasma-Behandlung - auch für latentreaktive Klebebänder bekannt. Im Sinne der vorliegenden Erfindung findet die Aktivierung jedoch durch thermische Energiezufuhr statt, und die weiteren Aktivierungsmethoden können insbesondere und optional ergänzend (additiv) eingesetzt werden.

Während der Wärmezufuhr schmilzt der Klebstoff auf und kann die zu verklebenden Substratoberflächen hervorragend benetzen, und durch die Vernetzungsbeziehungsweise Härtungsreaktion kommt es zu einer Kohäsionserhöhung des Klebstoffs.

Durch die reaktive Verklebung sind die erfindungsgemäßen Klebefilme somit in der Lage, hohe Verklebungsfestigkeiten zu den Substratuntergründen, auf denen sie verklebt werden, zu generieren. Die Verklebungsfestigkeiten können dabei beispielsweise Größenordnungen annehmen, die denen üblicher Haftklebstoffe (typischerweise <1,0 MPa im Push-Out-Test) um den Faktor 10 und mehr übersteigen.

Die erfindungsgemäß eingesetzten Klebstoffe und die entsprechenden Klebefilme sind latent-reaktiv. Als latentreaktiv werden im Sinne dieser Erfindung solche aktivierbaren Klebesysteme bezeichnet, die ohne Aktivierung über längere Zeiträume stabil lagerbar sind. Latent-reaktive Klebefilme sind insbesondere solche, die bei Normalklima (23 °C [296,15 K]; 50 % r.F.) und vorteilhaft bei erhöhten Lagerungstemperaturen (insbesondere bis 40 °C [316,15 K]) nicht oder nur über einen Zeitraum von mehreren Wochen, bevorzugt Monaten aushärten und damit lagerstabil sind, die aber bei höheren Temperaturen aktivierbar sind und aushärten und/oder vernetzen. Die latente Reaktivität bietet den Vorteil, dass diese Klebefilme bei Normalklima und vorteilhaft insbesondere bei erhöhten Temperaturen bis 40 °C gelagert, transportiert und weiter verarbeitet (beispielsweise konfektioniert) werden können, bevor sie dann an der Verklebungsstelle zum Einsatz kommen und ausgehärtet werden.

Dabei sollen sich die Klebstoffe während der Lagerzeit nicht signifikant verändern, so dass die Verklebungseigenschaften eines frisch nach der Herstellung zur Verklebung angewendeten Klebstoffsystems und eines nach längerer Lagerung für die ansonsten vergleichbare Verklebung angewendeten Klebstoffsystems nicht wesentlich unterscheiden,

mindestens jedoch noch dem Anforderungsprofil entsprechen (Push-Out > 1,5 MPa), bevorzugt noch mindestens 50 %, besonders bevorzugt noch mindestens 75 %, ganz besonders bevorzugt noch mindestens 90 % der Performance des nicht gelagerten Klebefilms aufweisen.

Die erfindungsgemäßen Zusammensetzungen zeichnen sich dadurch aus, dass sie einerseits latentreaktiv sind und andererseits bei erhöhter Temperatur schnell härtbar.

In einer bevorzugten Ausführung der Erfindung sind dem Klebstoff zumindest ein klebverstärkendes Additiv - auch als Haftvermittler bezeichnet - zugesetzt. Haftvermittler sind Substanzen, die die Haftkraft des Klebefilms auf dem zu verklebenden Substrat verbessern. Dies kann insbesondere durch eine Erhöhung der Benetzbarkeit der Substratoberflächen und/oder die Ausbildung chemischer Bindungen zwischen der Substratoberfläche und dem Klebstoff beziehungsweise Komponenten des Klebstoffs geschehen. Vorteilhafte Haftvermittler sind vorstehend unter (F) beschrieben.

Klebefilme

Der erfindungsgemäße Klebstoff ist ein Klebefilm oder ist - neben einer oder mehreren weiteren Schichten - Teil eines Klebefilms. Von der Erfindung umfasst werden somit auch Klebefilme aus dem erfindungsgemäßen Klebstoff und Klebefilme umfassend eine Schicht aus dem erfindungsgemäßen Klebstoff.

Die erfindungsgemäßen Klebefilme können einschichtig - das heißt allein aus der Schicht des zugrundeliegenden Klebstoff- oder auch mehrschichtig aufgebaut sein, etwa mit einer Verstärkungs- beziehungsweise Trägerschicht versehen sein. Vorteilhaft sind einschichtige Systeme, sogenannte Transferklebebänder.

Als Träger können prinzipiell alle Schichten aus die dem Fachmann hierfür geeigneten Materialien genutzt werden, je nach gewünschten Eigenschaften des Produktes und Beständigkeit bei der thermischen Aktivierung. So können beispielweise Trägermaterialien wie textile Materialien, Gewebe, Vliese, Papiere, Kunststofffolien, wie beispielweise mono-oder biaxial gereckte, gegebenenfalls orientierte Polyolefine, Polyvinylchlorid-Folien (PVC), Polypropylen-Folien, Polyethylen (PE)-Folien, wie HDPE, LDPE), Polyethylenterephthalat-Folien (PET), Polylactid-Folien sowie Schäume und Gewebe eingesetzt werden. Trägermaterialien können hohe oder geringe Dehnungsfähigkeit und/oder Flexibilität haben und beispielsweise reißfest oder leicht einreißbar gewählt werden. Als Träger können grundsätzlich ebenfalls geeignete - insbesondere kohäsive - Kautschukfilme oder Klebstoffschichten, wie etwa Haftklebstoffe oder aktivierbare Klebstoffe, genutzt werden, die eine entsprechende Eigenstabilität mitbringen und den Anforderungen an die Verklebungsbedingungen der Klebefilme genügen.

Die Klebefilme können ein- oder beidseitig mit einem schützenden Material abgedeckt sein, sogenannten "Linern". Liner dienen dem temporären Schutz und der Handhabbarkeit des Klebebandes werden für die Applikation wieder entfernt. Im Sinne der vorliegenden Erfindung werden solche Liner als prozessuale Hilfsmittel, nicht aber als eigentlicher Teil der erfindungsgemäßen Klebefilme angesehen. Bei Linern kann es sich um Papier oder Folien handeln, die zumindest auf der zum erfindungsgemäßen Klebefilm gerichteten Seite mit einem dem Fachmann bekannten, geeigneten Trennmittel ausgerüstet sind. Es kann sich dabei auch um Papier oder Folien handeln, die leicht haftklebrig ausgerüstet sind (sogenannte Tackyliner).

Erfindungsgemäß können auch Laminatklebebänder, also Klebebänder aus einer Mehrzahl aufeinander angeordneter Klebeschichten, angeboten werden. Laminate sind beispielsweise vorteilhaft, wenn dickere trägerlose Klebebänder durch einfache Prozesse hergestellt werden sollen, da es in der Regel einfacher ist, dünne Klebeschichten zu produzieren und diese dann miteinander zu laminieren, als Klebeschichten der resultierenden Gesamtdicke direkt zu einem gleichmäßigen, homogenen Produkt zu beschichten.

Erfindungsgemäße Klebeschichten, Transferklebebänder und Laminatklebebänder können dabei von sehr dünnen Ausführungen - im Bereich weniger Mikrometer - bis hin zu sehr dicken Schichten - im Bereich mehrerer Zentimeter - ausgestaltet werden. Entsprechend können mehrschichtige Klebebänder - insbesondere auch solche, die neben den Klebeschichten weitere Schichten umfassen - in ihrer Dicke variieren, gegeben durch die jeweilige Dicke der Klebeschichten - wie vorstehend beschrieben - und der verwendeten weiteren Schichten, wie Trägerschichten, Haftklebstoffe, funktionelle (Bsp.: thermisch und/oder elektrisch leitende oder isolierende) Schichten, Primerschichten und dergleichen.

Typische Schichtdicken für erfindungsgemäße Einschicht-Klebefilme liegen im Bereich von 1 bis 500 $\mu$m, beispielsweise 5, 20, 25, 50, 75, 100, 125, 150, 175 oder 200 $\mu$m.

Die erfindungsgemäßen Klebefilme sind selbsttragend und somit eigenständige Produkte, das heißt sie können ohne weiteres gelagert, transportiert und appliziert werden. Dies unterscheidet sie wesentlich von "Klebefilmen" aus Flüssigklebern, also Klebstoffschichten, die nur nach Auftragung auf das jeweilige zu verklebende Substrat existieren und dort - im Rahmen ihrer Applikation bei der Verwendung - verfestigt werden, aber nicht wieder als eigenständiges Produkt vom Substrat abgenommen werden. So können erfindungsgemäße Klebefilme etwa zur Rolle aufgewickelt werden oder als Abschnitte, Stanzlingen oder sogenannte Die-Cuts angeboten werden. Entsprechend sind auch beliebige Zuschnitte und Stanzlinge erfindungsgemäßer Klebefilme Gegenstand der Erfindung. Ein weiterer Vorteil der erfindungsgemäßen Klebefilme gegenüber filmförmigen Auftragungen aus Flüssigklebern besteht darin, dass diese während der Applikation und Härtungsreaktion eine intrinsische Dimensionsstabilität aufweisen und nicht, wie filmförmige Auftragungen aus Flüssigklebern, während der Härtungsreaktion fixiert werden müssen.

Die wirksame Verklebung mittels der Klebefilme unter deren Aktivierung bedeutet ein Zusammenwirken aus Temperatur, Zeit (Taktzeit), je niedriger einer der Parameter gewählt wird, desto höher kann oder muss ein anderer Parameter gewählt werden. Mit höheren Temperaturen lassen sich etwa niedrigere Taktzeiten realisieren. Kann die Taktzeit länger eingestellt werden, so ist es möglich, bei niedrigerer Temperatur zu arbeiten.

Der Verpressdruck stellt in diesem Zusammenhang in erster Linie einen Prozessparameter dar und ist von den verwendeten Rohstoffen der Formulierung in Kombination mit der Taktzeit abhängig. So kann durch einen erhöhten Druck das Auffließen auf die Substrate sowie die Benetzung der Substrate bei Formulierungen mit erhöhter Schmelzviskosität in Kombination mit kurzen Taktzeiten begünstigt werden. Bei Formulierungen mit geringerer Schmelzviskosität, insbesondere in Kombination mit längeren Taktzeiten, kann ein niedrigerer Druck vorteilhaft sein, um ein ungewolltes Ausquetschen (sogenanntes Oozing) des Klebstoffs aus der Klebefuge zu verhindern. Für die hier ermittelten, vorteilhaften und erfindungsgemäßen Formulierungen konnte beispielweise vorteilhaft mit einem Pressdruck von 10 bar gearbeitet werden, wobei die Erfindung jedoch nicht auf diesen Pressdruck beschränkt ist.

Insbesondere die Kontaktzeit bei der Aktivierung des Klebefilms (die Aktivierungszeit) kann durch Variationsmöglichkeiten der anderen Parameter in den noch zur Verfügung stehenden Parametergrenzen, die durch die Beständigkeit der zu verklebenden Substrate gegeben werden, erheblich reduziert werden.

Grundsätzlich wird die maximal erlaubte Temperatur durch die zu verklebenden Substrate bestimmt. Für viele der angestrebten Anwendungen (etwa die Verklebung empfindlicher Kunststoffe und/oder anodisierten Substraten) sollte die Temperatur nicht höher als 120 °C gewählt werden, um die Substrate nicht zu schädigen. Besonders vorteilhaft ist es, ein Temperaturfenster zwischen 80 °C und 100 °C zu wählen. Dabei gilt grundsätzlich, dass die Taktzeit desto kürzer sein sollte, je höher die gewählte Temperatur ist, um die Substrate einem minimalen schädigenden Wärmeeinfluss einzusetzen. Dabei können maximale Taktzeiten von bis zu 20 Minuten, vorteilhaft 10 bis 15 Minuten, aufgrund der moderaten Temperaturen akzeptabel sein. Häufig ist eine möglichst kurze Taktzeit bei einer maximal möglichen Temperatur, abhängig von der Sensibilität der zu fügenden Substrate, vorteilhaft, um die Produktivität im Verarbeitungsprozess zu erhöhen. Sind die zu verklebenden Substrate jedoch sehr empfindlich, kann es zu bevorzugen sein, die Temperatur zu senken und dafür die Taktzeiten zu verlängern.

Die erfindungsgemäßen Klebefilme sind regelmäßig gut lagerbar, ohne dabei ihre positiven Eigenschaften als Klebefilme zu verlieren. Die Lagerfähigkeit der Klebefilme wird dabei signifikant von der Beständigkeit der Radikalbildner beeinflusst. Dabei sollen sich die Klebstoffe während der Lagerzeit nicht signifikant verändern, so dass die Verklebungseigenschaften eines frisch nach der Herstellung zur Verklebung angewendeten Klebstoffsystems und eines nach längerer Lagerung, insbesondere bei vorgegebenen Lagerungsbedingungen, für die ansonsten vergleichbare Verklebung angewendeten Klebstoffsystems nicht wesentlich unterscheiden. Erfindungsgemäß vorteilhaft ist der eingesetzte Klebefilm in der Lage, bei Temperaturen von weniger als 120 °C, bevorzugt im Temperaturbereich von 80 bis 100 °C, innerhalb von nicht mehr als 20 Minuten auszuhärten, übersteht aber bei Raumtemperatur - 23 °C - eine siebentägige Lagerung, ohne signifikant an Reaktivität zu verlieren. "Signifikant nicht Reaktivität verlieren" bedeutet dabei, dass er nach Lagerung mindestens noch dem Anforderungsprofil entspricht, stärker bevorzugt noch mindestens 50 %, besonders bevorzugt noch mindestens 75 %, ganz besonders bevorzugt noch mindestens 90 % der Performance des nicht gelagerten Klebefilms aufweist.

Die Feucht-Wärme-Beständigkeit kann noch dadurch optimiert werden, dass dem Klebstoff, der zur Herstellung des erfindungsgemäßen latent-reaktiven Klebfilms genutzt wird, ein oder mehrere Haftvermittler zugesetzt werden. Als Haftvermittler können dabei Substanzen eingesetzt werden, die die Adhäsion des Klebefilms zur Substratoberfläche verbessern.

Als quantitatives Kriterium für die Verklebungseigenschaften eines Klebefilms wird insbesondere der sogenannte Push-Out-Test angesehen. Für den Push-Out-Test wird ein scheibenförmiges Substrat mit einer Klebefilmprobe auf einem zweiten, rahmenförmigen Substrat verklebt und dann die Kraft ermittelt, die aufgebracht werden muss, um die beiden Substrate wieder voneinander zu trennen (vergleiche hierzu die näheren Details im experimentellen Teil; Testmethode A).

In bevorzugter Weise weisen die erfindungsgemäßen Klebefilme eine gute Verklebungsfestigkeit auf. Zur Quantifizierung der Verklebungsfestigkeit dient das Ergebnis des Push-Out-Tests. Bevorzugt weisen die erfindungsgemäßen Klebefilme als Frischprobe (frisch beschichteter Klebefilm nach Trocknung für 30 min bei 70°C in einem geeigneten Umlufttrockenschrank und anschließender, 24 h Konditionierung im Normklima (23 °C / 50 % r.F.) im Push-Out-Test (Kraftmessung zur Lösung eines Klebeverbundes aus einer Polycarbonatscheibe (Makrolon 099) mit einem Rahmen aus anodisiertem Aluminium (E6EV1) mittels einer Schicht des zu untersuchenden Klebefilms von 100 $\mu$m Dicke bei einer effektiven Verklebungsfläche von 282 $mm^2$ [vergleiche für nähere Details auch Tests A und B] einen Push-Out-Wert von mindestens 1,5 MPa, bevorzugt von mindestens 2,5 MPa, ganz besonders bevorzugt von mindestens 3,5 MPa oder sogar höher auf.

In weiter sehr bevorzugter Weise weisen die erfindungsgemäßen Klebefilme zudem eine gute Feucht-Wärmebeständigkeit auf. Zur Quantifizierung der Feucht-Wärmebeständigkeit kann ebenfalls der Push-Out-Test, und zwar nach definierter Lagerung (72 h bei 85 °C und 85 % r,F,) des zu untersuchenden, mittels des erfindungsgemäßen Klebefilms hergestellten Klebeverbundes herangezogen werden. Die Details dieses Tests sind im experimentellen Teil detailliert beschrieben.

Vorteilhafte Ausführungen der Erfindung sind dadurch gekennzeichnet, dass die Verklebungsfestigkeit des feuchtwärme-gelagerten Klebeverbundes - in Kombination mit den vorgenannten Mindestwerten und insbesondere im Sinne des vorgenannten Push-Out-Kraftwertes - mehr als 50 % des nicht feuchtwärmegelagerten Klebeverbundes beträgt, mehr bevorzugt mehr als 75 % und sehr bevorzugt mehr als 90 % des nicht feuchtwärmegelagerten Klebeverbundes beträgt oder den Wert des nicht feuchtwärmegelagerten Verbundes sogar übersteigt.

Als latent-reaktive Klebstoffsysteme werden solche aktivierbaren Klebstoffe bezeichnet, die ohne Aktivierung über längere Zeiträume stabil lagerbar sind. Die latente Reaktivität bietet den Vorteil, dass diese Klebefilme bei Normalklima und/oder bei definierten Bedingungen gelagert, transportiert und weiter verarbeitet (beispielweise konfektioniert) werden können, bevor sie dann an der Verklebungsstelle zum Einsatz kommen und ausgehärtet werden.

Dabei sollen sich die Klebstoffe während der Lagerzeit vorteilhaft nicht signifikant verändern, so dass die Verklebungseigenschaften eines frisch nach der Herstellung zur Verklebung angewendeten Klebstoffsystems und eines nach längerer Lagerung für die ansonsten vergleichbare Verklebung angewendeten Klebstoffsystems nicht wesentlich unterscheiden. Auch die Latent-Reaktivität (im Rahmen der Schrift auch als Latenz bezeichnet) der Klebefilme lässt sich über den Push-Out-Test quantifizieren.

Die erfindungsgemäßen Klebefilme sind grundsätzlich zum Verkleben aller Substrate geeignet, und zwar sowohl starrer als auch flexibler Materialien. Die zu verklebenden Substrate können diverse Ausgestaltungen, Dicken und dergleichen haben. Beispielhaft genannt seien hier Glas, Kunststoffe aller Art, Metall, Keramik, Textilien, Stoffe aller Art, Kunstleder, natürliche Substrate jeweils mit demselben Material und auch untereinander.

<u>Experimenteller Teil</u>

Mit den im Folgenden dargestellten Prüfmethoden werden die erfindungsgemäßen Klebefilmproben sowie die Vergleichsproben evaluiert. Die Prüfmethoden stellen dabei die bevorzugten Messverfahren für die jeweiligen vorstehend beschriebenen Merkmale dar, soweit dort das Messverfahren nicht explizit anders definiert wurde.

*Test I: Push-Out*

Der Push-Out-Test ermöglicht Aussagen über die Verklebungsfestigkeit eines Klebeprodukts in Richtung der Klebschichtnormalen. Bereitgestellt werden ein kreisförmiges erstes Substrat (1) (Polycarbonat, Makrolon 099, Dicke 3 mm) mit Durchmesser 21 mm, ein zweites Substrat (2) (anodisiertes Aluminium, E6EV1, Dicke 1,5 mm) - beispielsweise quadratförmig mit 40 mm Seitenlänge - mit einer kreisförmigen, zentral angeordneten Öffnung (Bohrung) von 9 mm Durchmesser sowie die zu untersuchenden Klebefilmprobe, die ebenfalls kreisförmig mit 21 mm Durchmesser konfektioniert (zugeschnitten oder gestanzt) wurde.

Aus den vorgenannten drei Bauteilen wird ein Prüfkörper hergestellt, indem das Klebeprodukt mit der freien Oberfläche passgenau auf das Substrat (1) vorlaminiert (bei 70 °C für 15 s) wird. Dann wird der temporäre Träger entfernt und dieser Verbund mit der nun freiliegenden Seite des Klebeproduktes auf das Substrat 2 konzentrisch vorlaminiert (ebenfalls bei 70 °C für 15 s), also derart, dass die kreisrunde Aussparung des Substrats 2 genau mittig über dem kreisrunden ersten Substrat 1 angeordnet ist (Verklebungsfläche somit 282 $mm^2$). Es wird darauf geachtet, dass die Gesamtzeit der Temperatureinwirkung (70 °C) im Vorlaminierprozess 30 s nicht überschreitet. Anschließend wird der Gesamtverbund unter Druck und Temperatureinwirkung verpresst, wobei der Prüfkörper entsteht. Die Verpressbedingungen werden in der Auswertung angegeben.

Die Austestung nach jeweiliger Lagerung erfolgt wie folgt: Eine Zugprüfmaschine wird mit einem zylindrischen Stempel (Stahl, Durchmesser 7 mm) ausgerüstet und der Prüfkörper über Substrat (2) in eine Halterung der Zugprüfmaschine eingespannt, so dass Substrat (1) nur durch die Verklebung gehalten wird und durch hinreichenden Druck durch Lösung der Verklebung abgelöst werden kann. Die Probe wird derart fixiert, dass ein durch die Krafteinwirkung während der Prüfung mögliches Verbiegen von Substrat (2) minimiert wird. Mittels des zylindrischen Stempels wird durch das Loch in Substrat (2) senkrecht (also parallel entgegengerichtet zum Normalenvektor der Klebeproduktoberfläche) und zentrisch auf die freiliegende Fläche des Klebeproduktes mit einer konstanten Geschwindigkeit von 10 mm/s gedrückt, die Austestungen finden im Standard-Prüfklima (23 °C bei 50 % r.F.) statt.

Aufgenommen wird diejenige Kraft, bei der die Verklebung versagt und Substrat (1) von Substrat (2) gelöst wird (Lösung der Klebeverbindung, erkennbar durch plötzlichen Kraftabfall). Die Kraft wird auf die Verklebungsfläche normiert ($N/mm^2$ beziehungsweise MPa). Aufgrund der natürlich hohen Streuung der Einzelergebnisse, insbesondere bei Labormustern und durch das teilweise auftretende Adhäsionsversagen (Versagen an der Grenzfläche Substrat - Klebefilm), wird der arithmetische Mittelwert aus drei Einzelprüfungen berechnet.

*Test I.a. Prüfklima-Lagerung*

Die Prüfkörper werden nach dem Verpressen für 24 h bei 23 °C und 50 % relativer Luftfeuchtigkeit (r.F.) (Standard-Prüfklima) gelagert (Rekonditionierung).

*Test I.b. Feucht-Wärme-Lagerung*

Die Prüfkörper werden nach dem Verpressen für 24 h bei 23 °C und 50 % relativer Luftfeuchtigkeit (r.F.) (Standard-Prüfklima) gelagert und anschließend aufrecht stehend (auf einer der 40 mm Längsseiten der Grundplatte) einer Feucht-Wärme-Lagerung (72 h bei 85 °C und 85 % r.F.) unterzogen und vor Prüfung wieder 24 h bei 23 °C und 50 % rF rekonditioniert.

Sollte das Substrat 1 während der Feucht-Wärme-Lagerung vom Substrat 2 abrutschen (oder die Substrate erkennbar gegeneinander verrutschen), hat die Probe versagt und es besteht keine ausreichende Feucht-Wärme-Beständigkeit. Eine Feucht-Wärme-Beständigkeit liegt vor, wenn die Verklebungsfestigkeit nach Rekonditionierung mehr als 50 % des Wertes vor Feucht-Wärme-Lagerung beträgt, eine gute bei mehr als 75 % des Ursprungswertes und eine sehr gute Feucht-Wärme-Beständigkeit, wenn der Wert mindestens 90 % des Ursprungswertes beträgt oder diesen übersteigt.

***Test II: DSC-Messung***

Charakterisierungen von Polymeren sind mittels DSC möglich. Sofern einschlägig, erfolgt die Dynamische Differenzkalorimetrie (Differential Scanning Calorimetry, DSC) nach DIN 53765 und DIN 53765:1994-03. Aufheizkurven laufen mit einer Heizrate von 10 K/min. Die Muster werden in Al-Tiegeln mit gelochtem Deckel und Stickstoffatmosphäre vermessen. Die erste Aufheizkurve erfolgt von -140 °C bis +250 °C, die zweite Aufheizkurve von -140 °C bis +300 °C. Es werden beide Aufheizkurven ausgewertet. Die Auswertung der Enthalpie erfolgt durch Integration des Reaktionspeaks.

Diese Messung dient auch zur Bestimmung der Glasübergangstemperaturen, wobei sich deren Angaben auf den Glasumwandlungstemperatur-Wert Tg der genannten Messmethode beziehen, und des Schmelzpunktes wobei deren Angaben sich auf das Peak-Maximum-Wert TSP der Schmelztemperaturmessung beziehen, und des Erweichungspunktes, wobei sich deren Angabe auf das Peak-Maximum der Dekristallisation / Peak-Minimum der Kristallisation (kristalline oder semikristalline Systeme) beziehen.

***Test III: GPC (Gelpermeationschromatographie)***

Gewichtsmittlere und zahlenmittlere Molmassen ($M^w$ beziehungsweise $M_n$) lassen sich mit Gelpermeationschromatographie bestimmen. Zunächst wurde eine Kalibration mit Polystyrol-Standards im Trennbereich der Säule durchgeführt. Im Anschluss daran wurde unter Nutzung der bekannten Mark-Houwink-Koeffizienten a und K die Polystyrol-Kalibrierung universell in eine Poly(methyl-methacrylate)-Kalibrierung umgerechnet.

Die Proben wurden exakt eingewogen, mit einem definierten Volumen Lösungsmittel (Eluent mit ca. 200 ppm (m/V) Toluol als interner Standard) versetzt und 24 Stunden bei Raumtemperatur gelöst. Anschließend wurden die Lösungen über einen 1,0 µm Einmalfilter filtriert und mit einem Autosampler injiziert.
Eluent: THF / 0.1 Vol% Trifluoressigsäure (TFA)
Vorsäule: PSS - SDV, 10 µm, ID 8.0 mm x 50 mm
Säulen: PSS - SDV, 10 µm linear one, ID 8.0 mm x 300 mm SN0032906
Pumpe: PSS-SECcurity 1260 HPLC-Pumpe
Fluss: 0.5 ml/min
Probenkonzentration: ca. 0.5 g/l
Injektionssystem: PSS-SECcurity 1260 Autosampler ALS
Injektionsvolumen: 100 µl
Temperatur: 23 °C
Detektor: PSS-SECcurity 1260 RID
Danach werden die Molmassen $M_w$ und $M_n$ bestimmt.

**Test IV: Shear Adhesion Failure Temperature (SAFT)**

Die Bestimmung der SAFT wurde wie folgt durchgeführt: Als definierter Haftgrund wurde eine polierte Stahlfläche eingesetzt. Das zu untersuchende, verklebbare Flächenelement wurde auf eine Breite von 10 mm und eine Länge von etwa 5 cm zugeschnitten und unmittelbar danach dreimal mit einer Stahlrolle von 2 kg bei einem Vorschub von 10

m/min auf den jeweils gewählten Haftgrund mit einer Fläche von 10 x 13 mm aufgedrückt. Unmittelbar im Anschluss daran wurde das zuvor verklebte Flächenelement parallel zur Stahlfläche mit 0,5 N belastet und eine Temperaturrampe von 9°C/min gefahren. Dabei wurde die Temperatur gemessen, bei der die Probe eine Rutschstrecke von 1 mm zurückgelegt hat. Der Messwert (in °C) ergibt sich als Mittelwert aus zwei Einzelmessungen.

Dabei ist die ermittelte Temperatur ein Maß für den Härtungsgrad. Je höher die Temperatur ist, bei der die Probe eine Rutschstrecke von 1 mm zurückgelegt hat, desto höher ist auch der Härtungsgrad.

Eingesetzte Rohstoffe

| **Rohstoffe** | **Handelsname** | **Firma** | CAS | **Art** |
|---|---|---|---|---|
| semikristallines thermoplastisches Hydroxylpolyurethan | Desmomelt 530 | Covestro AG | | TPU |
| thermoplastisches gesättigtes Styrol-Butadien-TriblockCopolymer | Sibstar 103T | Kaneka | | SIBS |
| Ethylen-vinylacetatglycidyl methacrylat Terpolymer | Levapren NPG | Arlanxeo | | Epoxidfunkti onalisiertes EVA |
| 3,4-Epoxycyclohexylmethyl-3,4-Epoxycyclohexancarboxylat | Uvacure 1500 | Cytec | 2386-87-0 | cycloaliphati sches Diepoxid (Epoxidharz) |
| 3,4-Epoxycyclohexylmethylmethacrylat | (Chemikalie) | | 82428-30-6 | Monomer |
| Bis(dodecylphenyl)iodo-niumhexafluoroantimonat (in C12/C14-Glycidylether, ca. 50 %) | Deuteron UV 1242 | Deuteron GmbH | 71786-70-4 | PAG |
| 4-Isopropyl-4'-methyldiphenyliodonium-tetrakis (pentafluorophyl)-boratlodoniumborat | Speedcure 939 | Lambson Limited | 178233-72-2 | PAG |
| Flüssiges Bisphenol-A/ Epichlorhydrin-basierendes Epoxidharz | Epikote 828 LVEL | Momentive Specialty Chemicals B.V. | 25068-38-6 | Epoxidharz |
| Festes Bisphenol-A-basierendes Epoxidharz | Araldite GT 7072N | Huntsman | 25068-38-6 | Epoxidharz |
| Aceton | (Chemikalie) | | 666-52-4 | Lösemittel |
| Cyclohexan | (Chemikalie) | | 110-82-7 | Lösemittel |
| Methylethylketon (MEK) | (Chemikalie) | | 78-93-3 | Lösemittel |
| Voll hydriertes cycloaliphatisches Kohlenwasserstoffharz | Escorez 5300 | ExxonMobile | 68132-00-3 | Klebharz |
| Di-(4-tert-butylcyclohexyl)-peroxydicarbonat | Perkadox 16 | Akzo Nobel | 15520-11-3 | Radikalbildner |
| 2,2-azobis(2-methylbutyronitril) | Vazo 67 | Sigma Aldrich | 13472-08-7 | Radikalbildner |
| 2,2-Azobis(2,4-dimethylvaleronitril) | (Chemikalie) | | 4419-11-8 | Radikalbildner |
| Kommerziell erhältliche Produkte werden eingesetzt wie im März 2020 erhältlich. | | | | |

Polymerisation des TTA15 - Homopolymers

In einem vakuumfesten Standard 2 L Glasreaktor werden 100 g 3,4-Epoxycyclohexylmethacrylat (TTA15 - JIANGSU TETRA NEW MATERIAL TECHNOLOGY CO.,LTD. (CAS 82428-30-6)) und 298,5 g MEK eingewogen. Das Reaktionsgemisch wird mit Stickstoff bis zur Sauerstofffreiheit inertisiert und anschließend auf eine Produkttemperatur von 70 °C erhitzt. Der Polymerisationsreaktor wird bei konstanter Produkttemperatur von 70 °C bis zum Rückfluss am Kühler evakuiert. Die Reaktion wird isotherm bei der Produkttemperatur von 70 °C durchgeführt. Mit Erreichen des

Rückflusses wird die Reaktion mit 2 g 2,2-Azobis(2,4-dimethylvaleronitril) (CAS 4419-11-8) gelöst in 5,8 g MEK initiiert. 1 h, 2 h, 3 h nach der ersten Initiatorzugabe werden jeweils 2 g 2,2-Azobis(2,4-dimethylvaleronitril), gelöst in 5,8 g MEK und 100 g 3,4-Epoxycyclohexylmethacrylat der Reaktion hinzugefügt. Nach 6 h, 7 h werden jeweils 0,6 g Di-(4-tert-butylcyclohexyl)-peroxydicarbonat (CAS 15520-11-3), gelöst in 11,4 g MEK hinzugegeben. 22 h nach Zugabe des ersten Initiators wird die Reaktion abgebrochen und die Polymerlösung auf Raumtemperatur abgekühlt. Das so erhaltene Polymer hat nachfolgende, mittels Gelpermeationschromatographie gemessene Molmassenverteilung: Mw = 32375 g/mol, Mn = 13441 g/mol. PDI = 2,4087.

**Beispiele 1 bis 4**

| | |
|---|---|
| Beispiel 1 | 50 Gew.-% TTA15-Homopolymer + 50 Gew.-% Desmomelt 530 + 5 Gew-% Di-(4-tert-butylcyclohexyl)-peroxydicarbonat + 2,5 Gew.-% Deuteron UV 1242 |
| Beispiel 2 | 30 Gew.-% 3,4-Epoxycyclohexylmethyl-3',4'-epoxycyclohexan-carboxylat + 70 Gew.-% Levapren NPG + 6,5 Gew-% Di-(4-tert-butylcyclohexyl)-peroxydicarbonat + 1,0 Gew.-% Speedcure 939 |
| Beispiel 3 | 30 Gew.-% Araldite GT 7072N + 70 Gew.-% Levapren NPG + 6,5 Gew-% Di-(4-tert-butylcyclohexyl)-peroxydicarbonat + 1,0 Gew.-% Speedcure 939 |
| Beispiel 4 | 30 Gew.-% Epikote 828 LVEL + 70 Gew.-% Levapren NPG + 6,5 Gew-% Di-(4-tert-butylcyclohexyl)-peroxydicarbonat + 1,0 Gew.-% Speedcure 939 |

Die Formulierungsbestandteile wurden in einem geeigneten Schraubdeckelglas auf einem geeigneten Rollenmischer in MEK als Lösungsmittel homogenisiert, mittels üblichem, geeigneten und fachbekannten Beschichtungsverfahrens zu einer Trockenfilmdicke von 100 μm beschichtet und in einem geeigneten Umlufttrockenschrank für 30 Minuten bei 40 °C getrocknet.

**Beispiel 5**

| | |
|---|---|
| Beispiel 5 | 35 Gew.-Teile Sibstar 103T + 35 Gew.-Teile Escorez 5300 (Ring and Ball 105 °C, DACP = 71, MMAP = 72) + 30 Gew.-Teile Uvacure 1500 wurden gelöst in einem Gemisch aus Cyclohexan und Aceton (95:5 in Gew.-%, hier bezogen auf die Lösemittelmischung), so dass eine 50 Gew.-%ige Lösung entsteht. Anschließend: 15 Gew-Teile Perkadox 16 + 5 Gew.-Teile Deuteron UV 1242 werden in Methylethylketon gelöst so dass eine 10 Gew.-%ige Lösung entsteht. Die Lösungen werden sodann miteinander vermischt. |

Mittels eines Rakelverfahrens wurde die Formulierung aus Lösung auf einen silikonisierten PET-Liner beschichtet und bei 120 °C für 10 min getrocknet. Der Masseauftrag betrug 50 $g/m^2$. Das Muster wurde mit einer weiteren Lage eines silikonisierten, aber leichter trennenden PET-Liners eingedeckt.

**Vergleichsbeispiel V1**

| | |
|---|---|
| Beispiel V1 | 35 Gew.-Teile Sibstar 103T + 35 Gew.-Teile Escorez 5300 (Ring and Ball 105 °C, DACP = 71, MMAP = 72) + 30 Gew.-Teile Uvacure 1500 wurden gelöst in einem Gemisch aus Cyclohexan und Aceton (95:5 in Gew.-%, hier bezogen auf die Lösemittelmischung), so dass eine 50 Gew.-%ige Lösung entsteht. |

Mittels eines Rakelverfahrens wurde die Formulierung aus Lösung auf einen silikonisierten PET-Liner beschichtet und bei 120 °C für 10 min getrocknet. Der Masseauftrag betrug 50 $g/m^2$. Das Muster wurde mit einer weiteren Lage eines silikonisierten, aber leichter trennenden PET-Liners eingedeckt.

Ergebnisse:

**Push-Out-Test (Test Ia Beispiele 1 bis 4)**

| | Beispiel 1 | s | Beispiel 2 | s | Beispiel 3 | s | Beispiel 4 | s |
|---|---|---|---|---|---|---|---|---|
| Verpressbedingungen | 15 Min @ 100°C, 10 bar | | 30 Min @ 80°C, 5 bar | s | 30 Min @ 80°C, 5 bar | s | 30 Min @ 80°C, 5 bar | |
| frisch [MPa] | 3,7 | 0,5 | 2,1 | 0,1 | 2,5 | 0,1 | 1,6 | 0,5 |
| 85/85 [MPa | 0,8 | 0,7 | 1,8 | 0,1 | 2,6 | 0,3 | 1,6 | 0,3 |
| s = Standardabweichung | | | | | | | | |

**Push-Out-Test nach Lagerung (Test Ib; Beispiel 3)**

| | 16 h 40°C | | 31 h 40°C | | 103 h 40°C | | 10 d 40°C | |
|---|---|---|---|---|---|---|---|---|
| Verpressbedingungen | MPa | s | MPa | s | MPa | s | MPa | s |
| 30 Min @ 80°C, 5 bar | 2,4 | 0,1 | 2,3 | 0,2 | 2,1 | 0,1 | 2,3 | 0,1 |
| h = Stunden, d = Tage, s = Standardabweichung | | | | | | | | |

**Push-Out-Test nach Lagerung (Test Ib; Beispiel 4)**

| | 16 h 40°C | | 31 h 40°C | | 103 h 40°C | | 10 d 40°C | |
|---|---|---|---|---|---|---|---|---|
| Verpressbedingungen | MPa | s | MPa | s | MPa | s | MPa | s |
| 30 Min @ 80°C, 5 bar | 2,0 | 0,4 | 2,1 | 0,1 | 1,8 | 0,3 | 1,7 | 0,6 |
| h = Stunden, d = Tage, s = Standardabweichung | | | | | | | | |

**SAFT-Test (Test IV, Beispiel 5 und Vergleichsbeispiel V1)**

| Beispiel | SAFT [°C] |
|---|---|
| Beispiel 5 | 186 |
| Vergleichsbeispiel V1 | 60 |

Aus der SAFT Messung geht klar hervor, dass die Temperatur des erfindungsgemäßen Beispiels deutlich höher als die Temperatur des Vergleichbeispiels (ohne Radikalbildner und Photosäurebildner) ist, was ein Beleg für eine vollständigere Härtungsreaktion ist.

## Patentansprüche

**1.** Verfahren zum Fügen zweier Substrate unter Verwendung eines thermisch härtbaren Klebefilm, umfassend mindestens eine Schicht aus einem Klebstoff, der mindestens ein mit Epoxid-Gruppen funktionalisiertes (Co)Polymer (A) mit einer gewichtsmittleren Molmasse im Bereich von 5 000 g/mol bis 5 000 000 g/mol und/oder mindestens eine Epoxid-haltige Verbindung (B), die vom (Co)Polymer (A) verschieden ist;
mindestens einen Radikalbildner (C);
mindestens einen Photosäurebildner (D);
gegebenenfalls mindestens ein Matrixpolymer als Filmbildner (E); und
gegebenenfalls mindestens ein Additiv (F) umfasst oder daraus besteht,
**dadurch gekennzeichnet, dass**
die Aushärtung des Klebefilms bei Temperaturen von weniger als 120 °C stattfindet.

2. Verfahren nach Anspruch 1, **dadurch gekennzeichnet, dass** die Aushärtung des Klebefilms in einem Temperaturbereich zwischen 80 °C und 100 °C stattfindet.

3. Verfahren nach einem der vorangehenden Ansprüche, **dadurch gekennzeichnet, dass** der Klebstoff eine Glasübergangstemperatur von nicht mehr als 10 °C aufweist.

4. Verfahren nach einem der vorangehenden Ansprüche, **dadurch gekennzeichnet, dass** als mit Epoxid-Gruppen funktionalisierte (Co)Polymere (A) (meth)acrylische (Co)Polymere eingesetzt werden, besonders bevorzugt solche auf Baisis cycloaliphatischer Epoxide.

5. Verfahren nach Anspruch 4, **dadurch gekennzeichnet, dass** die funktionalisierten (Co)Polymere (A) zu mindestens 50 Gew.-% auf cycloaliphatischen Epoxiden basieren, besonders bevorzugt vollständig auf cycloaliphatischen Epoxiden basieren.

6. Verfahren nach Anspruch 4, **dadurch gekennzeichnet, dass** die funktionalisierten (Co)Polymere (A) zu nicht mehr als 50 Gew.-%, bevorzugt nicht mehr als 20 Gew.-%, besonders bevorzugt 3 bis 10 Gew-% auf cycloaliphatische Epoxide basieren.

7. Verfahren nach einem der vorangehenden Ansprüche, **dadurch gekennzeichnet, dass** als mit Epoxid-Gruppen funktionalisierte (Co)Polymere (A) Polymere oder Präpolymere von 3,4-Epoxycyclohexyl-methyl-3,4-epoxycyclohexan-carboxylat und/oder von 3,4-Epoxycyclohexylmethacrylat eingesetzt werden.

8. Verfahren nach einem der vorangehenden Ansprüche, **dadurch gekennzeichnet, dass** als Epoxid-haltige Verbindung (B) Glycidylether-Gruppen-haltige (Co)Polymere und/oder Glycidylether und/oder nicht polymere Epoxide und/oder epoxidierte Acrylnitril-Butadien-Kautschuke eingesetzt werden.

9. Verfahren nach einem der vorangehenden Ansprüche, **dadurch gekennzeichnet, dass** als Epoxid-haltige Verbindung (B) 3,4-Epoxycyclohexyl-methyl-3,4-epoxycyclohexan-carboxylat und/oder 3,4-Epoxycyclohexylmethacrylat eingesetzt wird.

10. Verfahren nach einem der vorangehenden Ansprüche, **dadurch gekennzeichnet, dass** der Radikalbildner mindestens zwei Organylgruppen enthält und/oder ein Peroxid ist.

11. Verfahren nach einem der vorangehenden Ansprüche, **dadurch gekennzeichnet, dass** der Radikalbildner ausgewählt ist aus der folgenden Gruppe:
Bisisobutyrylperoxid, 1-Methyl-1-phenylethylperoxyneodecanoat, Bis(3-methoxybutyl)-peroxydicarbonat, 1,1,3,3-Tetramethylbutylperoxyneodecanoat, Cumylperoxyneohepta-noat, tert-Pentyl-peroxyneodecanoat, Di-(4-tert-butylcyclohexyl)-peroxydicarbonat, tert-Amylperoxy-2-ethylhexanoat.

12. Verfahren nach einem der vorangehenden Ansprüche, **dadurch gekennzeichnet, dass** der Photosäurebildner (D) ein Iodonium-Ion und/oder ein Antimonat-, Phosphat-, Aluminat- oder Borat-Ion beinhaltet, bevorzugt jedoch kein Sulfonium-Ion beinhaltet.

13. Verfahren nach einem der vorangehenden Ansprüche, **dadurch gekennzeichnet, dass** als Photosäurebildner (D) 4-Isopropyl-4'-methyldiphenyliodonium-tetrakis(pentafluorophenyl)-borat), Bis-(4-t-butylphenyl)-iodoniumhexafluorophosphat, Bis-(Dodecylphenyl)-iodonium-hexafluoroantimonat, Bis-(4-Dodecylphenyl)-iodoniumhexafluorophosphat, Bis-(4-methylphenyl)-iodoniumhexafluorophosphat, und/oder Diaryliodoniumhexafluorophosphat eingesetzt werden.

14. Verbund, umfassend zwei Substrate, die durch ein Verfahren gemäß der vorliegenden Ansprüche 1 bis 13 miteinander verklebt werden.

Europäisches Patentamt
European Patent Office
Office européen des brevets

# EUROPÄISCHER RECHERCHENBERICHT

Nummer der Anmeldung
EP 21 16 0901

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,P | WO 2020/069884 A1 (TESA SE [DE]) 9. April 2020 (2020-04-09) * Zusammenfassung * * Seite 2, Zeile 35 - Seite 3, Zeile 12 * * Seite 5, Zeile 27 - Seite 6, Zeile 36 * * Seite 13, Zeile 24 - Seite 15, Zeile 5 * * Seite 18, Zeile 10 - Seite 19, Zeile 13 * * Seite 20, Zeile 31 - Seite 21, Zeile 22; Ansprüche 1-5,7-11 * ----- | 1-14 | INV. C09J5/06 C09J7/10 C08K5/00 C08K5/14 B32B7/12 |
| X,D | WO 2016/047387 A1 (DEXERIALS CORP [JP]) 31. März 2016 (2016-03-31) * Zusammenfassung * * Seite 3 - Seite 5; Ansprüche 1-6 * ----- | 1-4,8, 10-14 | |
| X | US 2016/115354 A1 (HAYASHI SHINICHI [JP] ET AL) 28. April 2016 (2016-04-28) * Zusammenfassung * * Vergleichsbeispiel 5; Absatz [0026] - Absatz [0033]; Ansprüche 1,9; Tabelle 1 * ----- | 1-4, 10-14 | |
| | | | RECHERCHIERTE SACHGEBIETE (IPC) |
| | | | C09J C08K B32B |

Der vorliegende Recherchenbericht wurde für alle Patentansprüche erstellt

1

| Recherchenort | Abschlußdatum der Recherche | Prüfer |
|---|---|---|
| München | 20. Juli 2021 | Meier, Stefan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 21 16 0901

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-07-2021

| Im Recherchenbericht angeführtes Patentdokument | Datum der Veröffentlichung | Mitglied(er) der Patentfamilie | Datum der Veröffentlichung |
|---|---|---|---|
| WO 2020069884 A1 | 09-04-2020 | CA 3114968 A1 | 09-04-2020 |
| | | DE 102018216868 A1 | 02-04-2020 |
| | | EP 3861081 A1 | 11-08-2021 |
| | | KR 20210068528 A | 09-06-2021 |
| | | WO 2020069884 A1 | 09-04-2020 |
| WO 2016047387 A1 | 31-03-2016 | CN 106715622 A | 24-05-2017 |
| | | JP 6384234 B2 | 05-09-2018 |
| | | JP 2016065172 A | 28-04-2016 |
| | | KR 20170059922 A | 31-05-2017 |
| | | TW 201627450 A | 01-08-2016 |
| | | WO 2016047387 A1 | 31-03-2016 |
| US 2016115354 A1 | 28-04-2016 | CN 105473674 A | 06-04-2016 |
| | | CN 110591570 A | 20-12-2019 |
| | | JP 6232855 B2 | 22-11-2017 |
| | | JP 2015048403 A | 16-03-2015 |
| | | KR 20160048032 A | 03-05-2016 |
| | | TW 201516117 A | 01-05-2015 |
| | | US 2016115354 A1 | 28-04-2016 |
| | | WO 2015029622 A1 | 05-03-2015 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2016047387 A1
- DE 1020182016868
- WO 2015082143 A1
- WO 9624620 A1
- WO 9844008 A1
- DE 19949352 A1
- US 5945491 A
- US 5854364 A
- US 5789487 A
- WO 9801478 A1
- WO 9931144 A1
- US 3729313 A
- US 3741769 A
- US 4250053 A
- US 4394403 A
- US 2010063221 A1
- EP 0542716 B1
- EP 894841 B1
- EP 1308492 B1
- WO 2011009672 A1

### In der Beschreibung aufgeführte Nicht-Patentliteratur

- *Adv. Polym. Sci.,* 1997, vol. 127, 59
- Polymer Handbook. J. Wiley, 1999, vol. 1
- **HOUBEN-WEYL.** Methoden der Organischen Chemie. vol. E 19a, 60-147
- *Macromolecules,* 2000, vol. 33, 243-245
- **C. DONKER.** *PSTC Annual Technical Proceedings,* Mai 2001, 149-164
- *CHEMICAL ABSTRACTS,* 11097-59-9
- **U. W. GEDDE.** Polymer Physics. Kluwer, 1999, 70
- *CHEMICAL ABSTRACTS,* 2386-87-0, 82428-30-6, 71786-70-4, 178233-72-2, 25068-38-6, 25068-38-6, 666-52-4, 110-82-7, 78-93-3, 68132-00-3, 15520-11-3, 13472-08-7, 4419-11-8
- *CHEMICAL ABSTRACTS,* 82428-30-6
- *CHEMICAL ABSTRACTS,* 4419-11-8
- *CHEMICAL ABSTRACTS,* 15520-11-3